# EUROPEAN PATENT APPLICATION

(11) **EP 2 891 587 A1**
(43) Date of publication of application: **08.07.2015**
(21) Application number: 12883619.4
(22) Date of filing: 31.08.2012
(51) Int. Cl.: B60T 8/17, B60T 8/48, B60T 17/22

(54) **VEHICLE BRAKE APPARATUS**

(71) Applicant: Toyota Jidosha Kabushiki Kaisha, Toyota-shi, Aichi 471-8571 (JP)
(72) Inventor: MIYAZAKI Tetsuya, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/072120
(87) International publication number: WO 2014/033899

(57) **Abstract**

A holding valve (61) is provided on each of individual flow passages (51) for connecting a main flow passage (52) connected to an accumulator (32) of a power hydraulic pressure generation device (30) and each of wheel cylinders (42). The holding valve (61) permits, in an open state, communication between an upstream side and a downstream side so as to transmit a hydraulic pressure from the accumulator (32) to the wheel cylinder (42), and shuts off, in a closed state, the communication between the upstream side and the downstream side. One-way valves (CV1, CV2) each for permitting only communication from the downstream side to the upstream side to decrease the hydraulic pressure in the wheel cylinder (42) are respectively provided in parallel with holding valves (61 RR, 61 RL), among the holding valves (61), provided for a right-and-left-wheel side brake system configured so that a hydraulic pressure on the main flow passage (52) side (upstream side) to which the hydraulic pressure is transmitted from the accumulator (32) is always equal to or more than a hydraulic pressure on the wheel cylinder (42) side (downstream side).

## Description

### Technical Field

The present invention relates to a brake device for a vehicle, including a master cylinder for generating a hydraulic pressure in response to an operation by a driver on a brake pedal, a power hydraulic pressure source for generating a hydraulic pressure through drive of a pressure pump, a valve mechanism including a plurality of electromagnetic valves to be controlled by electric signals, for carrying out transmission of the hydraulic pressure output from the master cylinder or the power hydraulic pressure source, a wheel cylinder for applying a braking force to a wheel through the transmission of the hydraulic pressure output from the master cylinder or the power hydraulic pressure source via the valve mechanism, and control means for controlling an operation of the valve mechanism.

### Background Art

In recent years, there has been proposed a brake device configured to selectively use a hydraulic pressure from a master cylinder and a hydraulic pressure from a pressure pump (accumulator), which is a power hydraulic pressure source. Further, there has been proposed a brake device that includes a pressure increasing mechanism for increasing a hydraulic pressure from a master cylinder by using a hydraulic pressure of a pressure pump (accumulator) to output the increased hydraulic pressure, and is configured to selectively use the hydraulic pressure from the pressure pump (accumulator) and the hydraulic pressure from the pressure increasing mechanism. For example, brake systems disclosed in Patent Literature 1 and Patent Literature 2 have hitherto been known as the brake device of this type. In the brake systems, a target hydraulic pressure for each wheel cylinder is set so as to correspond to the hydraulic pressure generated in the master cylinder by a depressing operation by the driver on the brake pedal, and the hydraulic pressure (accumulator pressure) pressurized by the pressure pump is controlled to follow the set target hydraulic pressure for the wheel cylinder and to be supplied by driving a linear control valve and various electromagnetic on-off valves.

On the other hand, for example, when a fluid leak may occur in the brake system, the linear control valve and the various electromagnetic on-off valves are driven to divide the brake system into a brake system on a front right wheel side, a brake system on a front left wheel side, and a brake system on rear right and left wheel sides. As a result, even when a fluid leak occurs in any of the brake systems, the fluid leak is prevented from influencing the other brake systems, thereby appropriately generating braking forces on the wheels.

### Citation List

### Patent Literature

[PTL 1] JP 2011-156998 A
[PTL 2] JP 2011-156999 A

### Summary of Invention

The related-art brake systems include, as the various electromagnetic on-off valves, for a brake system for each wheel, a holding valve for at least permitting or shutting off communication between an upstream side connected to a main flow passage to which the hydraulic pressure is transmitted from the accumulator and a downstream side connected to the wheel cylinder, and a pressure reducing valve for permitting or shutting off communication between a reservoir and the wheel cylinder. As a result, in the related-art brake systems, when the hydraulic pressures in the wheel cylinders are maintained, for example, by following antiskid control, the holding valves are shifted to the closed states and the pressure reducing valves are shifted to the closed states, to thereby shut off the flows of the working fluid from the wheel cylinders toward the main flow passage and the flows of the working fluid from the wheel cylinders toward the reservoir to maintain the hydraulic pressures in the wheel cylinders.

Moreover, in the related-art brake systems, when a fluid leak may occur in any of the brake systems, for example, the holding valves for the front right and left wheel sides are shifted to the closed states, to thereby shut off communication between the wheel cylinders for the front right and left wheels and the main flow passage, resulting in divisions of the brake system into a brake system on the front right wheel side, a brake system on the front left wheel side, and a brake system on the rear right and left wheel sides. As a result, in the brake system on the front right wheel side and the brake system on the front left wheel side, the hydraulic pressure from the master cylinder can be directly transmitted to the wheel cylinders in a state in which the flows of the working fluid (namely, hydraulic pressure from the accumulator) from the main flow passage are shut off by the holding valves in the closed state.

Incidentally, in the related-art brake systems including the holding valves and the pressure reducing valves, in response to a driver's operation of releasing the brake pedal on which an operation of depressing has been carried out, namely an operation of reducing the hydraulic pressure in the wheel cylinders to "0", the holding valves are opened, and the pressure reducing valves are opened, to thereby permit the flows of the working fluid to decrease the hydraulic pressures in the wheel cylinders. Thus, in the related-art brake systems, the number of the holding valves and the pressure reducing valves to be operated to decrease the hydraulic pressures in the wheel cylinders, namely the number of electromagnetic on-off valves to be operated increases. As a result, the driver (occupant) tends to sense operation sounds caused by the operations of the electromagnetic on-off valves, resulting in impairment of excellent brake operation feeling.

Moreover, in the related-art brake systems, the holding valves and the pressure reducing valves need to be operated to open/close in response to the operation on the brake pedal in a return direction by the driver until the release operation of the brake pedal is completed, and hence it is difficult to quickly decrease the hydraulic pressures in the wheel cylinders. As a result, the driver may feel a sense of discomfort in brake operation feeling.

The present invention has been made in view of the above-mentioned problem, and therefore has an object to provide a brake device for a vehicle configured to provide satisfactory brake operation feeling.

In order to achieve the object, the brake device for a vehicle according to one embodiment of the present invention includes a master cylinder, a power hydraulic pressure source, a valve mechanism, a wheel cylinder, and control means.

The master cylinder is configured to generate a hydraulic pressure in response to an operation by a driver on a brake pedal. The power hydraulic pressure source is configured to generate a hydraulic pressure through drive of a pressure pump. It should be noted that if the power hydraulic pressure source includes an accumulator, the hydraulic pressure generated by the pressure pump is accumulated in the accumulator. The valve mechanism includes a plurality of electromagnetic valves to be controlled by electric signals, and is configured to carry out transmission of the hydraulic pressure output from the master cylinder or the power hydraulic pressure source. The wheel cylinder is configured to apply a braking force to a wheel through the transmission of the hydraulic pressure output from the master cylinder or the power hydraulic pressure source via the valve mechanism. The control means is configured to control the operation of the valve mechanism. Moreover, in this case, the brake device for a vehicle may include a pressure increasing mechanism. The pressure increasing mechanism is connected to the master cylinder and the power hydraulic pressure source, and is configured to generate a hydraulic pressure having a predetermined ratio with respect to the hydraulic pressure from the master cylinder by using the hydraulic pressure from the power hydraulic pressure source. On this occasion, for example, the pressure increasing mechanism may be configured to be mechanically operated by the hydraulic pressure output from the master cylinder in response to the operation by the driver on the brake pedal.

One feature of the brake device for a vehicle according to one embodiment of the present invention resides in that the valve mechanism includes: holding valves, each of which is an electromagnetic on-off valve, provided for respective wheels so as to realize at least communication or shutoff between an upstream side to which the hydraulic pressure from the power hydraulic pressure source is transmitted and a downstream side to which the wheel cylinder is connected; and a one-way valve for permitting only communication from the downstream side toward the upstream side so as to decrease the hydraulic pressure in the wheel cylinder, the one-way valve being arranged in parallel with a holding valve among the holding valves provided for the respective wheels, which is other than holding valves for permitting, in an open state, communication between the upstream side and the downstream side so as to transmit the hydraulic pressure from the power hydraulic pressure source to the wheel cylinder, and shutting off, in a closed state, the communication between the upstream side and the downstream side so as to transmit the hydraulic pressure from the master cylinder to the wheel cylinder.

In this case, the holding valve arranged in parallel with the one-way valve may be a holding valve provided for, among brake systems for transmitting at least the hydraulic pressure from the power hydraulic pressure source to the wheel cylinders, a brake system configured so that a hydraulic pressure on the upstream side to which the hydraulic pressure from the power hydraulic pressure source is transmitted is always equal to or more than a hydraulic pressure on the downstream side connected to the wheel cylinder. Further, in this case, the brake system configured so that the hydraulic pressure on the upstream side to which the hydraulic pressure from the power hydraulic pressure source is transmitted is always equal to or more than the hydraulic pressure on the downstream side connected to the wheel cylinder may be, for example, brake systems on rear right and left wheel sides for transmitting the hydraulic pressure from the power hydraulic pressure source to the wheel cylinders provided on a rear right wheel and a rear left wheel of the vehicle.

Further, in those cases, during an abnormal state in which there is a possibility of a leak of a working fluid in any of brake systems for transmitting the hydraulic pressure from the power hydraulic pressure source to the wheel cylinders provided on a front right wheel, a front left wheel, a rear right wheel, and a rear left wheel of the vehicle, the control means may control drive of the plurality of electromagnetic valves in the valve mechanism so as to maintain communication between the wheel cylinders provided on rear right and left wheel sides of the vehicle and the power hydraulic pressure source, to shut off communication between the wheel cylinders provided on front right and left wheel sides of the vehicle and the power hydraulic pressure source, and to transmit at least the hydraulic pressure from the master cylinder to the wheel cylinders provided on the front right and left wheel sides of the vehicle.

As a result, the one-way valve for permitting only the communication from the downstream side toward the upstream side so as to decrease the hydraulic pressure in the wheel cylinder may be provided in parallel with the holding valve other than holding valves for permitting, in the open state, the communication between the upstream side and the downstream side so as to transmit the hydraulic pressure from the power hydraulic pressure source to the wheel cylinder, and shutting off, in the closed state, the communication between the upstream side and the downstream side so as to transmit the hydraulic pressure from the master cylinder to the wheel cylinder, more specifically, the holding valve provided for a brake system (such as a brake system on the rear right and left wheel sides) configured so that the hydraulic pressure on the upstream side to which the hydraulic pressure from the power hydraulic pressure source is transmitted is always equal to or more than the hydraulic pressure on the downstream side connected to the wheel cylinder. As a result, when the driver carries out the operation in the return direction on the brake pedal on which the depressing operation has been carried out, the hydraulic pressure in the wheel cylinder can be decreased without operating the holding valve provided with the one-way valve (check valve) in parallel from the closed state to the open state, for example.

In other words, when the driver carries out the operation in the return direction on the brake pedal on which the depressing operation has been carried out, the control means operates the holding valve not provided with the one-way valve in parallel, for example, from the closed state to the open state in order to decrease the hydraulic pressure in the wheel cylinder. In contrast, for the holding valve provided with the one-way valve in parallel, the flow of the working fluid can be permitted from the downstream side to which the wheel cylinder is connected toward the upstream side via the one-way valve so that the hydraulic pressure on the upstream side is always higher than the hydraulic pressure on the downstream side. Therefore, even under the state in which the holding valve is maintained in the closed state, the control means can, for example, independently decrease the hydraulic pressure on the upstream side, thereby reducing the hydraulic pressure in the wheel cylinder without operating the holding valve provided with the one-way valve in parallel to be in the open state.

Thus, in the brake device for a vehicle according to one embodiment of the present invention, the number of electromagnetic valves (electromagnetic on-off valves) to be operated to decrease the hydraulic pressures in the wheel cylinders can be decreased. As a result, the driver (occupant) can be made less liable to sense the operation sounds caused by the operations of the electromagnetic valves (electromagnetic on-off valves), to thereby secure excellent brake operation feeling.

Further, another feature of the brake device for a vehicle according to one embodiment of the present invention, which includes the master cylinder, the power hydraulic pressure source, the valve mechanism, the wheel cylinder, and the control means, resides also in that the control means is configured to: control, during an abnormal state in which there is a possibility of a leak of a working fluid in any of brake systems for transmitting the hydraulic pressure from the power hydraulic pressure source to the wheel cylinders provided on a front right wheel, a front left wheel, a rear right wheel, and a rear left wheel of the vehicle, drive of the plurality of electromagnetic valves in the valve mechanism so as to maintain communication between the wheel cylinders provided on rear right and left wheel sides of the vehicle and the power hydraulic pressure source, to shut off communication between the wheel cylinders provided on front right and left wheel sides of the vehicle and the power hydraulic pressure source, and to transmit at least the hydraulic pressure from the master cylinder to the wheel cylinders provided on the front right and left wheel sides of the vehicle; and control, under the abnormal state, when an operation intending to decrease the hydraulic pressure in the wheel cylinder, which corresponds to an operation of returning the brake pedal on which a depressing operation has been carried out by the driver toward a return direction, is carried out, among the plurality of electromagnetic valves constructing the valve mechanism, one of a holding valve, which is an electromagnetic on-off valve for realizing at least communication or shutoff between an upstream side to which the hydraulic pressure from the power hydraulic pressure source is transmitted and a downstream side to which the wheel cylinder is connected, and a pressure reducing valve, which is an electromagnetic on-off valve for realizing at least communication or shutoff between the wheel cylinder and a reservoir, into an open state. On this occasion, also in this case, the brake device for a vehicle may further include the pressure increasing mechanism.

In this case, the control means may estimate the hydraulic pressure in the wheel cylinder for each of the front right wheel, the front left wheel, the rear right wheel, and the rear left wheel of the vehicle, and, based on the estimated hydraulic pressures, control one of the holding valve and the pressure reducing valve into the open state. It should be noted that, in this case, the control means may include hydraulic pressure estimation means for estimating the hydraulic pressure in the wheel cylinder for each of the front right wheel, the front left wheel, the rear right wheel, and the rear left wheel of the vehicle.

In this case, more specifically, the control means may compare a magnitude of an upstream side hydraulic pressure detected as a hydraulic pressure on the upstream side of the holding valve and a magnitude of the estimated hydraulic pressure in the wheel cylinder to each other, and, when the magnitude of the upstream side hydraulic pressure is less than the magnitude of the hydraulic pressure in the wheel cylinder, control one of the holding valve and the pressure reducing valve into the open state. It should be noted that, in this case, the control means may include hydraulic pressure detection means for detecting the hydraulic pressure on the upstream side of the holding valve, and hydraulic pressure comparison means for comparing the magnitude of the hydraulic pressure in the wheel cylinder estimated by the hydraulic pressure estimation means and the hydraulic pressure on the upstream side detected by the hydraulic pressure detection means to each other.

Further, in this case, the control means may control the pressure reducing valve into the open state so that the magnitude of the upstream side hydraulic pressure and the magnitude of the hydraulic pressure in the wheel cylinder match each other. Moreover, in this case, the control means may control the holding valve into the open state so that the magnitude of the upstream side hydraulic pressure and the magnitude of the hydraulic pressure in the wheel cylinder match each other.

As a result, during the abnormal state, when the brake pedal on which the depressing operation has been carried out by the driver is operated toward the return direction, the control means can control one of the holding valve and the pressure reducing valve into the open state, more specifically, controls one of the holding valve and the pressure reducing valve into the open state so that the magnitude of the hydraulic pressure on the upstream side and the magnitude of the hydraulic pressure in the wheel cylinder match each other, thereby quickly reducing the hydraulic pressure in the wheel cylinder. Thus, according to the brake device for a vehicle according to one embodiment of the present invention, in response to the operation toward the return direction by the driver until the release operation on the brake pedal is completed, the hydraulic pressure in the wheel cylinder can be quickly decreased. As result, the driver can operate the brake pedal while sensing excellent brake operation feeling.

Moreover, another feature of the brake device for a vehicle according to one embodiment of the present invention resides also in that: the brake device for a vehicle further includes upstream side hydraulic pressure adjustment means for adjusting the magnitude of the hydraulic pressure on the upstream side to which the hydraulic pressure from the power hydraulic pressure source is transmitted; and, at least when the control means controls the holding valve into the open state in response to an operation intending to decrease the hydraulic pressure in the wheel cylinder, which corresponds to an operation of returning the brake pedal on which a depressing operation has been carried out by the driver toward a return direction, the control means maintains the upstream side hydraulic pressure adjustment means in an operation preparation state so as to quickly suppress a change in the hydraulic pressure on the upstream side in preparation for the change in the hydraulic pressure caused by shift of the holding valve to the open state.

In this case, more specifically, during antiskid control of suppressing an excessive slip in a fore-and-aft direction of the wheel to which the braking force is applied, when the control means controls the holding valve into the open state in response to the operation of returning the brake pedal on which the depressing operation has been carried out by the driver toward the return direction, the control means may maintain the upstream side hydraulic pressure adjustment means in the operation preparation state so as to quickly suppress the change in the hydraulic pressure on the upstream side in preparation for the change in the hydraulic pressure caused by the shift of the holding valve to the open state.

Further, in those cases, the upstream side hydraulic pressure adjustment means may include, for example, an electromagnetic valve to be controlled by an electric signal for reducing the upstream side hydraulic pressure, and when the control means controls the holding valve into the open state, the control means may apply in advance, in order to quickly suppress a change in the upstream side hydraulic pressure to a high pressure side caused by the shift of the holding valve to the open state, an opening current to the electromagnetic valve, the opening current being used for quick shift from the closed state to the open state in response to a hydraulic pressure higher than a predetermined target hydraulic pressure.

In this case, more specifically, the electromagnetic valve may be a linear control valve configured to shift from the closed state to the open state or from the open state to the closed state depending on a resultant force of a spring force of a spring, a differential pressure force caused by a differential pressure generated between the upstream side on which a working fluid relatively high in pressure communicates and the downstream side on which the working fluid relatively low in pressure communicates, and an electromagnetic attraction force generated through supply of a current; and the control means may be configured to: use the predetermined target hydraulic pressure to set a target differential pressure for generating the differential pressure force in the linear control valve; use the target differential pressure to determine the opening current for generating the electromagnetic attraction force for maintaining the linear control valve in the closed state at a differential pressure equal to or less than an arbitrary differential pressure and shifting the linear control valve to the open state at a differential pressure more than the arbitrary differential pressure, the arbitrary differential pressure having a predetermined relationship with a differential pressure for generating the differential pressure force; and supply the opening current to the linear control valve. Then, in this case, the upstream side hydraulic pressure adjustment means may include, for example, a motor for driving the pressure pump for the power hydraulic pressure source; and when the control means controls the holding valve into the open state, the control means may drive the motor to rotate in advance to increase the hydraulic pressure on the upstream side of the linear control valve so as to quickly suppress the change in the hydraulic pressure on the upstream side to the high pressure side caused by the shift of the holding valve to the open state.

Moreover, in those cases, the control means may control the holding valve to shift to the open state, and thereafter control a supply current to be supplied to the holding valve so that the holding valve shifts from the open state to the closed state. In this case, specifically, the control means may be configured to: control the supply current to be small when the holding valve is a normally-closed electromagnetic on-off valve; and control the supply current to be large when the holding valve is a normally-open electromagnetic on-off valve.

As a result, when the control means controls the holding valve to shift from the closed state to the open state in response to the operation toward the return direction on the brake pedal on which the depressing operation has been carried out by the driver, the control means can maintain the upstream side hydraulic pressure adjustment means in the operation preparation state in order to quickly suppress the change in the hydraulic pressure on the upstream side, more specifically, the change to the high pressure side, caused by the shift of the holding valve to the open state. As a result, the influence caused by the change in the hydraulic pressure on the upstream side to the high pressure side, which acts on the other brake systems to which the hydraulic pressure on the upstream side is transmitted, namely a change in the hydraulic pressure in the wheel cylinder in each of the other brake systems to the high pressure side, can be securely prevented. Thus, the driver can operate the brake pedal while sensing the excellent brake operation feeling.

### Brief Description of Drawings

FIG. 1 is a schematic system diagram of a brake device for a vehicle according to an embodiment of the present invention.
FIG. 2 is a schematic cross sectional view illustrating a configuration of a pressure increasing mechanism of FIG. 1.
FIG. 3 is a diagram illustrating a linear control mode by the brake device for a vehicle according to the embodiment of the present invention.
FIG. 4 is a diagram illustrating a backup mode by the brake device for a vehicle according to the embodiment of the present invention when a fluid leak occurs.
FIG. 5 is a diagram illustrating a return operation during antiskid control by the brake device for a vehicle according to the embodiment of the present invention.
FIG. 6 is a graph showing a relationship between a differential pressure generated in a pressure reducing linear control valve and an opening current for shift to an open state during the return operation in the antiskid control of FIG. 5.
FIG. 7 is a schematic system diagram of a brake device for a vehicle according to a modified example of the present invention.
FIG. 8 is a diagram illustrating the return operation in the backup mode by the brake device for a vehicle according to the modified example of the present invention.

### Description of Embodiments

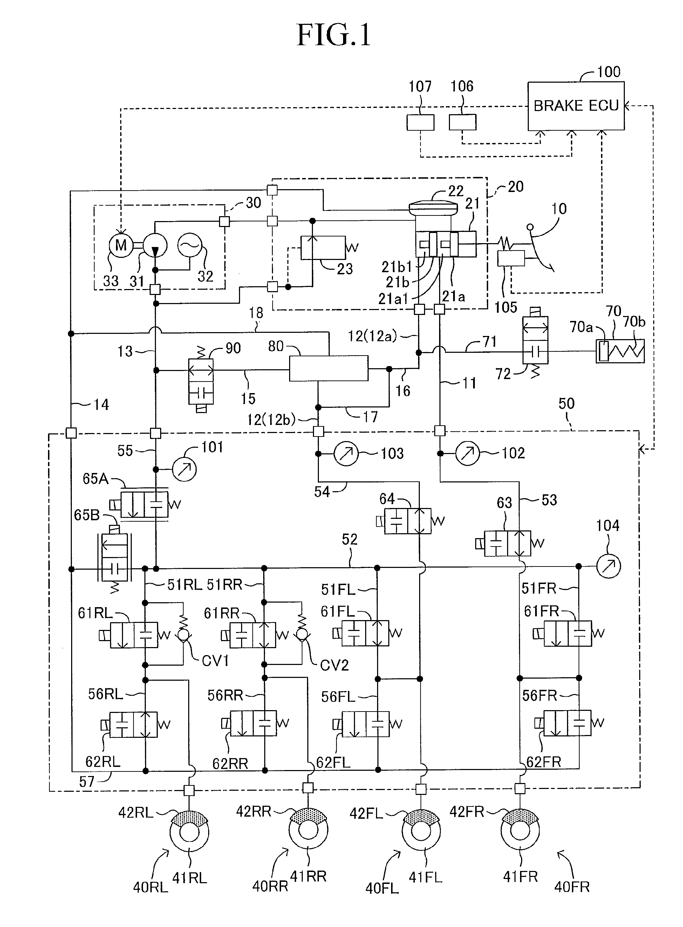

Now, a brake device for a vehicle according to an embodiment of the present invention is described referring to the drawings. FIG. 1 is a schematic system diagram of the brake device for a vehicle according to this embodiment.

The brake device for a vehicle includes a brake pedal 10, a master cylinder unit 20, a power hydraulic pressure generation device 30, a brake unit 40, a hydraulic pressure control valve device 50, a pressure increasing mechanism 80, and a brake ECU 100 for brake control.

The master cylinder unit 20 includes a master cylinder 21 and a reservoir 22. The master cylinder 21 is of a tandem type including pressure pistons 21a and 21b, and generates master cylinder pressures Pmc_FR and Pmc_FL having respective predetermined boost ratios to a pedal depressing force input in response to an operation of depressing the brake pedal 10 by a driver. The reservoir 22 for storing the working fluid is provided at a top of the master cylinder 21. As a result, when the driver's operation of depressing the brake pedal 10 is released and the pressure pistons 21a and 21b are retreated, in the master cylinder 21, pressure chambers 21a1 and 21b1 formed by the pressure pistons 21 a and 21 b communicate to the reservoir 22. It should be noted that the pressure chambers 21a1 and 21b1 respectively communicate to the hydraulic pressure control valve device 50 via master pressure pipes 11 and 12 described later.

The power hydraulic pressure generation device 30 is a power hydraulic pressure source (power supply), and includes a pressure pump 31 and an accumulator 32. The pressure pump 31 has an inlet opening connected to the reservoir 22 and an outlet opening connected to the accumulator 32, and pressurizes the working fluid through drive of a motor 33. The accumulator 32 converts pressure energy of the working fluid pressurized by the pressure pump 31 into pressure energy of a filler gas such as nitrogen, thereby accumulating the pressure energy. Moreover, the accumulator 32 is connected to a relief valve 23 provided to the master cylinder unit 20. The relief valve 23 opens when the pressure of the working fluid increases to a predetermined pressure or more, thereby returning the working fluid to the reservoir 22.

As illustrated in FIG. 1, the brake units 40 include brake units 40FR, 40FL, 40RR, and 40RL provided on the respective wheels of the vehicle.

In the following description, configurations provided on the respective wheels are denoted with such suffixes as FR for the front right wheel, FL for the front left wheel, RR for the rear right wheel, and RL for the rear left wheel, but if the identification of the wheel position is not particularly necessary, the suffixes are omitted. The brake units 40FR, 40FL, 40RR, and 40RL provided on respective wheels include brake rotors 41 FR, 41 FL, 41 RR, and 41 RL, and wheel cylinders 42FR, 42FL, 42RR, and 42RL integrated into brake calipers. The brake units 40 are not limited to the case where disk brakes are provided on all the four wheels, and, for example, drum brakes may be provided on all the four wheels, or the disk brakes and the drum brakes may be arbitrarily combined in such a way that the disk brakes are provided on the front wheels and the drum brakes are provided on the rear wheels.

The wheel cylinders 42FR, 42FL, 42RR, and 42RL are connected to the hydraulic pressure control valve device 50, and receive transmitted hydraulic pressures of a working fluid (brake fluid) supplied from the hydraulic pressure control device 50. Then, brake pads are pressed against the brake rotors 41 FR, 41 FL, 41 RR, and 41 RL rotating along with the wheels by the hydraulic pressure transmitted (supplied) from the hydraulic pressure control valve device 50, thereby applying braking forces to the wheels.

The brake device for a vehicle according to this embodiment includes, as the hydraulic pressure source for applying a hydraulic pressure of the working fluid to the wheel cylinders 42 via the hydraulic pressure control valve device 50, the master cylinder 21 of the master cylinder unit 20 (or the pressure increasing mechanism 80) for applying the hydraulic pressure by using the pedal depressing force input by the driver via the brake pedal 10, and the power hydraulic pressure generation device 30 for applying the hydraulic pressure independently of the master cylinder 21. Then, in the brake device for a vehicle, the master cylinder 21 (more specifically, pressure chambers 21a1 and 21b1) and the power hydraulic pressure generation device 30 (more specifically, at least the accumulator 32) are connected respectively to the hydraulic pressure control valve device 50 via the master pressure pipes 11 and 12 and an accumulator pressure pipe 13. Moreover, the reservoir 22 of the master cylinder unit 20 is connected to the hydraulic pressure control valve device 50 via a reservoir pipe 14. It should be noted that, hereinafter, regarding the master pressure pipe 12, an upstream side (input side) with respect to the pressure increasing mechanism 80 is referred to as master pressure pipe 12a, and a downstream side (output side) with respect to the pressure increasing mechanism 80 is referred to as master pressure pipe 12b for discrimination.

The hydraulic pressure control valve device 50 having a valve mechanism includes four individual flow passages 51 FR, 51 FL, 51 RR, and 51 RL connected to the respective wheel cylinders 42FR, 42FL, 42RR, and 42RL, a main flow passage 52 for communicating the individual flow passages 51 FR, 51 FL, 51 RR, and 51 RL to each other, master pressure flow passages 53 and 54 for connecting the individual flow passages 51 FR and 51 FL and the master pressure pipes 11 and 12 (12b), respectively, to each other, and an accumulator pressure flow passage 55 for connecting the main flow passage 52 and the accumulator pressure pipe 13 to each other. In this case, the master pressure flow passages 53 and 54 and the accumulator pressure flow passage 55 are connected in parallel with one another to the main flow passage 52.

Holding valves 61 FR, 61 FL, 61 RR, and 61 RL, which construct the valve mechanism, are respectively provided on the individual flow passages 51 FR, 51 FL, 51 RR, and 51 RL. The holding valves 61 FL and 61 RR provided for the brake unit 40FL on the front left wheel side and the brake unit 40RR on the rear right wheel side are normally-open electromagnetic on-off valves each being configured to be maintained in an open state by a biasing force of a spring in a non-current supply state of a solenoid and be brought into a closed state only in a current supply state of the solenoid. On the other hand, the holding valves 61 FR and 61 RL provided for the brake unit 40FR on the front right wheel side and the brake unit 40RL on the rear left wheel side are normally-closed electromagnetic on-off valves each being configured to be maintained in a closed state by a biasing force of a spring in a non-current supply state of a solenoid and be brought into an open state only in a current supply state of the solenoid. In other words, each of the holding valves 61 permits communication of the working fluid between the main flow passage 52 and the each wheel cylinder 42 in the open state, and inhibits the communication of the working fluid between the main flow passage 52 and the each wheel cylinder 42 in the closed state.

As a result, among the holding values 61 FR and 61 FL respectively provided on the brake units 40FR and 40FL on the front right and left wheel sides and the holding valves 61 RR and 61 RL respectively provided on the brake units 40RR and 40RL on the rear right and left wheel sides, the holding valves on the front right and left wheel sides are the normally-open electromagnetic on-off valves, and the holding valves on the rear right and left wheel sides are the normally-closed electromagnetic on-off valves. In other words, the holding valves 61 FL and 61 RR provided for the brake units 40FL and 40RR corresponding to the two wheels at one of front/rear diagonal positions are configured to be normally-open electromagnetic on-off valves, and the holding valves 61 FR and 61 RL provided for the brake units 40FR and 40RL corresponding to the two wheels at the other of the front/rear diagonal positions are configured to be normally-closed electromagnetic on-off valves. Thus, the brake device for a vehicle according to this embodiment forms a so-called cross system.

Further, check valves CV1 and CV2 serving as one-way valves each for reducing a pressure are respectively provided in parallel with the holding valves 61 RR and 61 RL provided on a brake system, specifically, a rear-right-and-left-wheel side brake system. The brake system is configured so that the hydraulic pressure (upstream side hydraulic pressure) in the main flow passage 52 on the upstream side communicating to the power hydraulic pressure generation device 30 (more specifically, the accumulator 32) or the master cylinder 21 as described later is always maintained equal to or more than the hydraulic pressures (downstream side pressures) in individual flow passages 56RR and 56RL on the downstream side communicating to the wheel cylinders 42RR and 42RL. Those check valves CV1 and CV2 are respectively configured so as to permit the communication of the working fluid only in one direction from the wheel cylinders 42RR and 42RL to the main flow passage 52. As a result, when a return operation is carried out on the brake pedal 10 on which the driver has carried out the depressing operation, the upstream side hydraulic pressure in the main flow passage 52 thus decreases. Then, the working fluid communicates from the wheel cylinder 42RR and 42RL sides to the main flow passage 52 via the check valves CV1 and CV2, resulting in quick decreases in the hydraulic pressures in the wheel cylinders 42RR and 42RL, namely, wheel cylinder pressures Pwc.

Moreover, pressure reducing individual flow passages 56FR, 56FL, 56RR, and 56RL are respectively connected to the individual flow passages 51 FR, 51 FL, 51 RR, and 51 RL. The respective pressure reducing individual flow passages 56 are connected to a reservoir flow passage 57. The reservoir flow passage 57 is connected to the reservoir 22 via the reservoir pipe 14. Pressure reducing valves 62FR, 62FL, 62RR, and 62RL, which construct the valve mechanism, are respectively provided at intermediate portions of the pressure reducing individual flow passages 56FR, 56FL, 56RR, and 56RL. The respective pressure reducing valves 62FR, 62FL, and 62RR are normally-closed electromagnetic on-off valves each being configured to be maintained in an open state by a biasing force of a spring in a non-current supply state of a solenoid and be brought into an open state only in a current supply state of the solenoid. The pressure reducing valve 62RL is a normally-open electromagnetic on-off valve configured to be maintained in an open state by a biasing force of a spring in a non-current supply state of a solenoid and be brought into a closed state only in a current supply state of the solenoid. The each pressure reducing valve 62 controls the working fluid to flow from the wheel cylinder 42 via the pressure reducing individual flow passage 56 to the reservoir flow passage 57, thereby reducing the wheel cylinder pressure Pwc.

Master cut valves 63 and 64 are respectively provided at intermediate portions of the master pressure flow passages 53 and 54. The respective master cut valves 63 and 64 are normally-open electromagnetic on-off valves each being configured to be maintained in an open state by a biasing force of a spring in a non-current supply state of a solenoid and be brought into a closed state only in a current supply state of the solenoid. By providing the master cut valves 63 and 64 as described above, when the master cut valves 63 and 64 are in the closed state, the connection is shut off between the master cylinder 21 (and the pressure increasing mechanism 80) and the wheel cylinders 42FR and 42FL, thereby inhibiting the communication of the working fluid, and when the master cut valves 63 and 64 are in the open state, the master cylinder 21 (and the pressure increasing mechanism 80) and the wheel cylinders 42FR and 42FL are connected, thereby permitting the communication of the working fluid.

A pressure increasing linear control valve 65A is provided at an intermediate portion of the accumulator pressure flow passage 55. Further, a pressure reducing linear control valve 65B is provided between the reservoir flow passage 57 and the main flow passage 52 to which the accumulator pressure flow passage 55 is connected. The pressure increasing linear control valve 65A and the pressure reducing linear control valve 65B are normally-closed electromagnetic linear control valves each being configured to be maintained in a closed state by a biasing force of a spring in a non-current supply state of a solenoid, and increase a valve opening degree along with an increase in current supply amount (current value) to the solenoid. A detailed description is not given of the pressure increasing linear control valve 65A and the pressure reducing linear control valve 65B, but both of the valves are maintained in the closed state by a valve closing force represented by a difference between a spring force of biasing a valve body toward a valve closing direction by the built-in spring and a pressure difference force of biasing the valve body toward a valve opening direction by a pressure difference between a primary side (inlet side) through which the working fluid relatively high in pressure communicates and a secondary side (outlet side) through which the working fluid relatively low in pressure communicates.

On the other hand, the pressure increasing linear control valve 65A and the pressure reducing linear control valve 65B open at an opening degree corresponding to a balance between the forces acting on the valve body if an electromagnetic attraction force generated by the current supply to the solenoid and acting toward the direction to open the valve body exceeds the valve closing force, that is, if a relationship of "electromagnetic attraction force>valve closing force (=spring force-pressure difference force)" holds true. Thus, by controlling the current supply amount (current value) to the solenoid, the pressure increasing linear control valve 65A and the pressure reducing linear control valve 65B can adjust the opening degree corresponding to the pressure difference force, namely, the pressure difference between the primary side (inlet side) and the secondary side (outlet side). On this occasion, the pressure increasing linear control valve 65A and the pressure reducing linear control valve 65B correspond to upstream side hydraulic pressure adjustment means of the present invention. In the following description, if the pressure increasing linear control valve 65A and the pressure reducing linear control valve 65B need not to be distinguished from each other, the valves are also simply referred to as linear control valves 65.

On this occasion, a stroke simulator 70 is connected to the master pressure pipe 12 (more specifically, the master pressure pipe 12a) connected to the master pressure flow passage 54 of the hydraulic pressure control valve device 50 in the brake device for a vehicle of this embodiment. The stroke simulator 70 includes a piston 70a and a spring 70b, and introduces the working fluid in an amount corresponding to a brake operation amount of the brake pedal 10 by the driver into the inside thereof. Then, the stroke simulator 70 displaces the piston 70a against the biasing force of the spring 70b in synchronous with the introduction of the working fluid into the inside thereof, thereby enabling a stroke operation on the brake pedal 10 by the driver and generating a reaction force corresponding to the brake operation amount to provide excellent brake operation feeling to the driver. The stroke simulator 70 is connected to the master pressure pipe 12 (master pressure pipe 12a) via a simulator flow passage 71 and a simulator cut valve 72. In this case, as a matter of course, the present invention may be carried out by connecting the stroke simulator 70 to the master pressure pipe 11.

Moreover, the pressure increasing mechanism 80 of this embodiment is configured to increase (providing the servo function for) the master cylinder pressure Pmc_FL output from the pressure chamber 21b1 of the master cylinder 21 and supply the master cylinder pressure Pmc_FL increased in pressure to the wheel cylinder 42FL. A description is now given of the pressure increasing mechanism 80. Any structure capable of increasing (providing the servo function for) the master cylinder pressure Pmc_FL by means of a mechanical operation described later can be employed as the pressure increasing mechanism 80. Moreover, a description is now given of a case where the pressure increasing mechanism 80 is provided on the master pressure pipe 12, but it should be understood that such a configuration that the pressure increasing mechanism 80 is provided on the master pressure pipe 11 can be embodied.

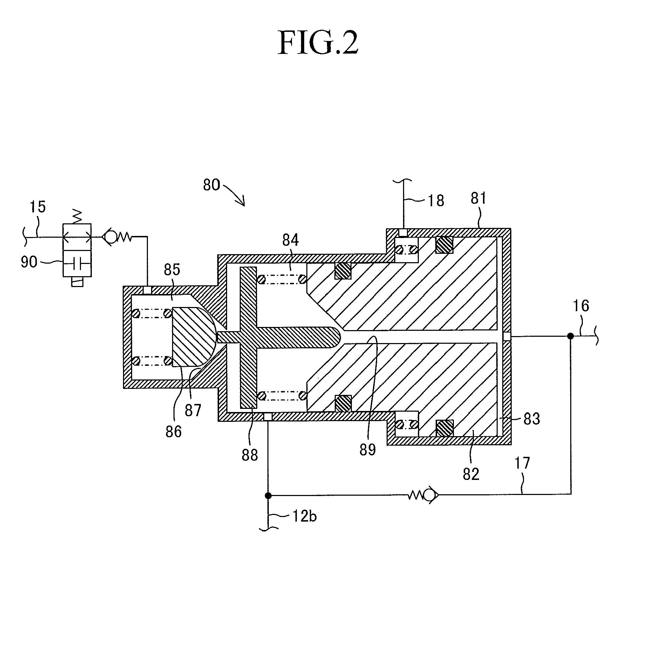

As illustrated in FIG. 2, the pressure increasing mechanism 80 includes a housing 81 and a stepped piston 82 fitted into the housing 81 in a liquid-tight and slidable manner. A large diameter chamber 83 is provided on a larger diameter side of the stepped piston 82, and a small diameter chamber 84 is provided on a smaller diameter side thereof. The small diameter chamber 84 can communicate to a high pressure chamber 85 connected to the accumulator 32 of the power hydraulic pressure generation device 30 via a high pressure supply valve 86 and a valve seat 87. As illustrated in FIG. 2, the high pressure supply valve 86 is pressed against the valve seat 87 by a biasing force of a spring in the high pressure chamber 85, and is a normally-closed valve.

Moreover, a valve opening member 88 is provided in the small diameter chamber 84 so as to be opposed to the high pressure supply valve 86, and a spring is provided between the valve opening member 88 and the stepped piston 82. A biasing force of the spring acts toward a direction of separating the valve opening member 88 from the stepped piston 82. Moreover, as illustrated in FIG. 2, a return spring is provided between a step portion of the stepped piston 82 and the housing 81, thereby biasing the stepped piston 82 toward a backward moving direction. It should be noted that a stopper (not shown) is provided between the stepped piston 82 and the housing 81, thereby regulating a forward movement end position of the stepped piston 82.

Further, a communication passage 89 for communicating the large diameter chamber 83 and the small diameter chamber 84 to each other is formed in the stepped piston 82. As illustrated in FIG. 2, the communication passage 89 causes the large diameter chamber 83 and the small diameter chamber 84 to communicate to each other under a state in which the stepped piston 82 is separated from the valve opening member 88 at at least a backward movement end position of the stepped piston 82, and, when the stepped piston 82 moves forward to abut against the valve opening member 88, the communication passage 89 is shut off. The pressure increasing mechanism 80 configured in this way operates as a mechanical pressure increasing device (mechanical valve).

It should be noted that, as illustrated in FIGS. 1 and 2, the high pressure chamber 85 and the power hydraulic pressure generation device 30 are connected to each other via a high pressure supply passage 15, and a check valve for permitting flow of the working fluid from the power hydraulic pressure generation device 30 to the high pressure chamber 85 and preventing flow in an opposite direction is provided in addition to a pressure increasing mechanism cut valve 90 on the high pressure supply flow passage 15. The pressure increasing mechanism cut valve 90 is a normally-open electromagnetic on-off valve configured to be maintained in an open state by a biasing force of a spring in a non-current supply state of a solenoid, and to be brought into a closed state only in a current supply state of the solenoid.

The pressure increasing mechanism cut valve 90 provided in this way shuts off the transmission of the hydraulic pressure, specifically, the communication of the working fluid, between the power hydraulic pressure generation device 30 (more specifically, the pressure pump 31 and the accumulator 32) and the high pressure chamber 85 in the closed state caused by the current supply to the solenoid. Thus, even if a fluid leak occurs in the pressure increasing mechanism 80 by an abnormality in sealing performance or the like, the pressure increasing mechanism cut valve 90 maintained in the closed state can securely prevent the working fluid at a high pressure from flowing backward from the accumulator 32 via the pressure increasing mechanism 80 and the master pressure pipe 12a to the master cylinder 21. Moreover, the communication (connection) between the accumulator 32 and the high pressure chamber 85 of the pressure increasing mechanism 80 via the high pressure supply passage 15 is shut off, and, thus, even if a fluid leak occurs in the pressure increasing mechanism 80 by an abnormality in sealing performance or the like, the hydraulic pressure (corresponding to an accumulator pressure Pacc described later) can be securely prevented from reducing (being consumed) in the accumulator 32.

Moreover, the check valve provided in the high pressure supply passage 15 permits the flow of the working fluid from the power hydraulic pressure generation device 30 to the high pressure chamber 85 when the hydraulic pressure in the power hydraulic pressure generation device 30 (more specifically, the accumulator 32) is higher than the hydraulic pressure in the high pressure chamber 85, but prevents the flows in both directions under the closed state when the hydraulic pressure in the power hydraulic pressure generation device 30 is equal to or less than the hydraulic pressure in the high pressure chamber 85. Thus, when the pressure increasing mechanism cut valve 90 is in the closed state, even if a fluid leak occurs in the power hydraulic pressure generation device 30, the working fluid is prevented from flowing backward from the high pressure chamber 85 to the power hydraulic pressure generation device 30, and the hydraulic pressure in the small diameter chamber 84 is prevented from reducing.

Moreover, the master pressure pipe 12a and the large diameter chamber 83 of the pressure increasing mechanism 80 are connected to each other via a pilot passage 16, and a bypass passage 17 for connection while bypassing the pressure increasing mechanism 80 is provided between the pilot passage 16 and an output side (namely, the master pressure pipe 12b communicating to the small diameter chamber 84) of the pressure increasing mechanism 80. Then, a check valve for permitting the working fluid to flow from the pilot passage 16 (master pressure pipe 12a) to the master pressure pipe 12b, which is the output side of the pressure increasing mechanism 80, and preventing the working fluid from flowing in the opposite direction is provided in the bypass passage 17. Further, a reservoir passage 18 is provided between a space formed by a step portion of the stepped piston 82 and the housing 81, and the reservoir pipe 14 communicating to the reservoir 22.

A brief specific description is given of the operation of the pressure increasing mechanism 80. In the pressure increasing mechanism 80, when the working fluid (master cylinder pressure Pmc_FL) is supplied from the master cylinder 21 via the master pressure pipe 12a and the pilot passage 16 to the large diameter chamber 83, the working fluid is supplied to the small diameter chamber 82 via the communication passage 89. Then, when the force in the forward moving direction acting on the stepped piston 82 by the supply of the working fluid (master cylinder pressure Pmc_FL) (forward moving force caused by the master cylinder pressure Pmc_FL acting on the large diameter chamber 83) becomes larger than the biasing force of the return spring, the stepped piston 82 moves forward. When the stepped piston 82 thus abuts against the valve opening member 88, and the communication passage 89 is shut off, the hydraulic pressure in the small diameter chamber 84 increases along with the forward movement of the stepped piston 82, and the working fluid increased in pressure (namely, the servo pressure) is output via the master pressure pipe 12b to the master pressure flow passage 54 of the hydraulic pressure control valve device 50.

Moreover, when the high pressure supply valve 86 is switched to the open state by the forward movement of the valve opening member 88, the high pressure working fluid is supplied from the high pressure chamber 85 to the small diameter chamber 84, resulting in a further increase in hydraulic pressure of the small diameter chamber 84. In this case, when the pressure increasing mechanism cut valve 90 is in the open state and the hydraulic pressure (accumulator pressure Pacc) of the working fluid accumulated in the accumulator 32 of the power hydraulic pressure generation device 30 is higher than the hydraulic pressure in the high pressure chamber 85, the hydraulic pressure (accumulator pressure Pacc) in the accumulator 32 is supplied to the high pressure chamber 85 via the check valve on the high pressure supply passage 15, and is then supplied to the small diameter chamber 84. Then, in the stepped piston 82, the hydraulic pressure in the large diameter chamber 83, namely, the master cylinder pressure Pmc_FL is adjusted to such a magnitude that the force acting on the large diameter side (master cylinder pressure Pmc_FL×pressure receiving area) and the force acting on the small diameter side (servo pressurexpressure receiving area) are balanced each other, and the adjusted hydraulic pressure is output. Thus, the pressure increasing mechanism 80 can be considered as a mechanical booster mechanism.

On the other hand, when the pressure increasing mechanism cut valve 90 is in the open state and the hydraulic pressure (accumulator pressure Pacc) in the accumulator 32 is equal to or less than the hydraulic pressure in the high pressure chamber 85, the check valve provided on the high pressure supply passage 15 prevents the flow of the working fluid between the accumulator 32 and the high pressure chamber 85, and hence the stepped piston 82 cannot move forward any more. Moreover, the stepped piston 82 may abut against the stopper to be restrained from moving forward. When the master cylinder pressure Pmc_FL supplied from the master cylinder 21 increases to be higher than the hydraulic pressure in the small diameter chamber 84 in this state, the master cylinder pressure Pmc_FL is supplied to the master pressure pipe 12b via the bypass passage 17 and the check valve.

The power hydraulic pressure generation device 30 and the hydraulic pressure control valve device 50 are controlled to be driven by the brake ECU 100 serving as control means. The brake ECU 100 includes a microcomputer constructed by a CPU, a ROM, a RAM, and the like as a main component, and includes a pump drive circuit, an electromagnetic valve drive circuit, an interface for inputting various sensor signals, and a communication interface. All the respective electromagnetic on-off valves 61 to 64, 72, and 90 and the linear control valves 65 provided in the hydraulic pressure control valve device 50 are connected to the brake ECU 100, and the open/closed state and the opening degrees (for the linear control valves 65) are controlled by solenoid drive signals output from the brake ECU 100. Moreover, the motor 33 provided to the power hydraulic pressure generation device 30 is also connected to the brake ECU 100, and is controlled to be driven by a motor drive signal output from the brake ECU 100.

The hydraulic pressure control valve device 50 is provided with an accumulator pressure sensor 101, master cylinder pressure sensors 102 and 103, and a control pressure sensor 104 as hydraulic pressure detection means. The accumulator pressure sensor 101 detects a hydraulic pressure of the working fluid in the accumulator pressure flow passage 55 on the power hydraulic pressure generation device 30 side (upstream side) with respect to the pressure increasing linear control valve 65A, namely, the accumulator pressure Pacc because the accumulator pressure flow passage 55 communicates to the accumulator 32 via the accumulator pressure pipe 13. The accumulator pressure sensor 101 outputs a signal representing the detected accumulator pressure Pacc to the brake ECU 100. With this, the brake ECU 100 reads the accumulator pressure Pacc at a predetermined cycle, and, if the accumulator pressure Pacc is less than a predetermined lowest set pressure, the brake ECU 100 drives the motor 33 to pressurize the working fluid by the pressure pump 31, thereby controlling the accumulator pressure Pacc to be always maintained within a set pressure range.

The master cylinder pressure sensor 102 detects a hydraulic pressure of the working fluid in the master pressure flow passage 53 on the master cylinder 21 side (upstream side) with respect to the master cut valve 63, namely, the master cylinder pressure Pmc_FR because the master pressure flow passage 53 communicates to the pressure chamber 22a1 via the master pressure pipe 11. The master cylinder pressure sensor 103 detects a hydraulic pressure of the working fluid in the master pressure flow passage 54 on the master cylinder 21 side (upstream side) with respect to the master cut valve 64, namely, the master cylinder pressure Pmc_FL because the master pressure flow passage 54 communicates to the pressure chamber 21 b1 via the master pressure pipe 12. The master cylinder pressure sensors 102 and 103 output signals representing the detected master cylinder pressures Pmc_FR and Pmc_FL to the brake ECU 100. The control pressure sensor 104 outputs to the brake ECU 100 a signal representing a hydraulic pressure of the working fluid in the main flow passage 52, that is, a control pressure Px.

Moreover, a stroke sensor 105 provided on the brake pedal 10 is connected to the brake ECU 100. The stroke sensor 105 outputs, to the brake ECU 100, a signal representing a pedal stroke Sm, which is a depressing amount (operation amount) of the brake pedal 10 by the driver. Moreover, a wheel speed sensor 106 is connected to the brake ECU 100. The wheel speed sensor 106 detects a wheel speed Vx, which is a rotational speed of the front and rear, right and left wheels, and outputs a signal representing the detected wheel speed Vx to the brake ECU 100. Further, an indicator 107 for notifying the driver of an abnormality occurring on the brake device for a vehicle is connected to the brake ECU 100. The indicator 107 follows the control by the brake ECU 100, and notifies the driver of the occurring abnormality.

A description is now given of the brake control carried out by the brake ECU 100. The brake ECU 100 selectively carries out the brake control in two control modes, which are a linear control mode (4S mode) and a backup mode (2S mode). In the linear control mode, the hydraulic pressure (more specifically, the accumulator pressure Pacc) output from the power hydraulic pressure generation device 30 is adjusted by the linear control valves 65 and the adjusted hydraulic pressure is transmitted to the respective wheel cylinders 42 via the main flow passage 52. In the backup mode, the master cylinder pressures Pmc_FR and Pmc_FL generated in the master cylinder 21 in response to the pedal depressing force by the driver on the brake pedal 10 are transmitted to the wheel cylinders 42FR and 42FL on the front right and left wheel sides, or the accumulator pressure Pacc adjusted by the linear control valves 65 is transmitted to the wheel cylinders 42RR and 42RL on the rear right and left wheel sides.

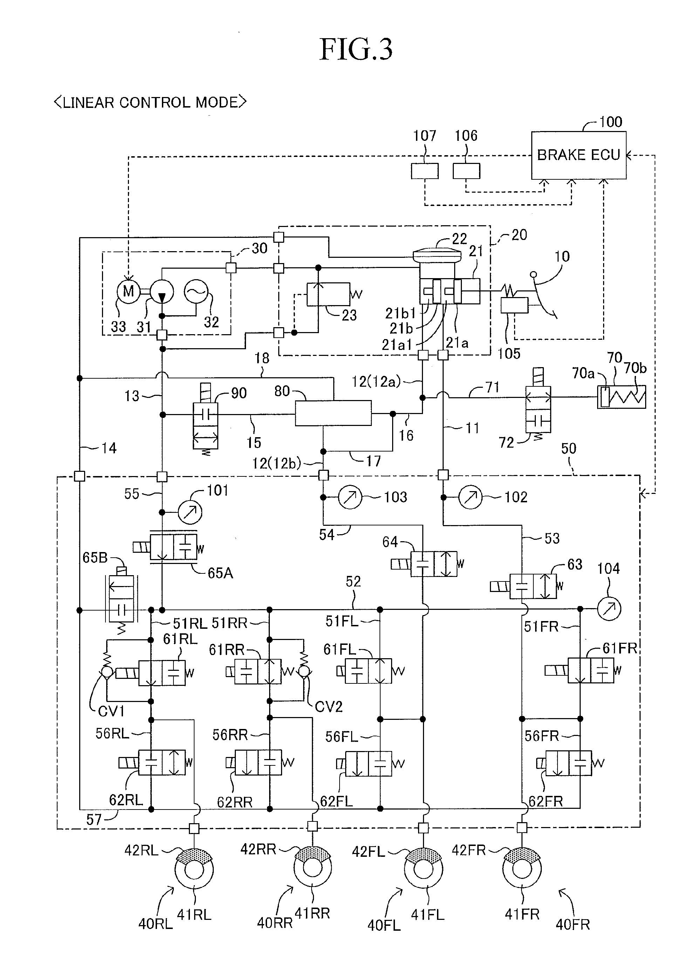

First, as illustrated in FIG. 3, in the linear control mode, the brake ECU 100 maintains each of the normally-open master cut valves 63 and 64 in the closed state by the current supply to the solenoids, and maintains the simulator cut valve 72 in the open state by the current supply to the solenoid. Moreover, in the linear control mode according to this embodiment, the brake ECU 100 maintains the normally-open pressure increasing mechanism cut valve 90 in the closed state by the current supply to the solenoid.

Further, in the linear control mode, the brake ECU 100 controls current supply amounts (current values) to the solenoids of the pressure increasing linear control valve 65A and the pressure reducing linear control valve 65B so that the pressure increasing linear control valve 65A and the pressure reducing linear control valve 65B have opening degrees corresponding to the current supply amounts. Further, the brake ECU 100 maintains the normally-open holding valves 61 FL and 61 RR in the open state, and maintains the normally-closed holding valves 61 FR and 61 RL in the open state by current supply to the solenoids. Moreover, the brake ECU 100 maintains the normally-closed pressure reducing valves 62FR, 62FL, and 62RR in the closed state, and maintains the normally-open pressure reducing valve 62RL in the closed state by current supply to the solenoid.

The open state and the closed state of each of the electromagnetic valves (electromagnetic on-off valves) constructing the hydraulic pressure control valve device 50 are controlled in this way. Thus, both the master cut valves 63 and 64 are maintained in the closed state in the linear control mode, and hence the master cylinder pressures Pmc_FR and Pmc_FL output from the master cylinder 21 are not transmitted to the wheel cylinders 42FR and 42FL. Moreover, the pressure increasing mechanism cut valve 90 is maintained in the closed state, and hence the accumulator pressure Pacc output from the pressure pump 31 or the accumulator 32 of the power hydraulic pressure generation device 30 is not transmitted to the pressure increasing mechanism 80. Thus, in the linear control mode, the high accumulator pressure Pacc is prevented from being transmitted to the master cylinder 21 from the high pressure chamber 85 of the pressure increasing mechanism 80 via the small diameter chamber 84, the communication passage 89, the large diameter chamber 83, the pilot passage 16, and the master pressure pipe 12 (12a).

On the other hand, the pressure increasing linear control valve 65A and the pressure reducing linear control valve 65B are in the current supply control state of the solenoids, and hence the accumulator pressure Pacc output from the power hydraulic pressure generation device 30 is adjusted by the pressure increasing linear control valve 65A and the pressure reducing linear control valve 65B, and is transmitted to the wheel cylinders 42 at the four wheels. In this case, the holding valves 61 are maintained in the open state, and the pressure reducing valves 62 are maintained in the closed state, and hence the wheel cylinders 42 each communicate to the main flow passage 52. Thus, all the control pressures Px, that is, all the wheel cylinder pressures Pwc have the same value at the four wheels.

Incidentally, the vehicle on which the brake device for a vehicle according to this embodiment is installed may be, for example, an electric vehicle (EV) including a running motor driven by battery power supply, a hybrid vehicle (HV) including an internal combustion engine in addition to the running motor, and a plug-in hybrid vehicle (PHV), which is a hybrid vehicle (HV) further including a battery rechargeable by using an external power supply. Each of those vehicles can carry out regenerative braking in the following manner. Electric power is generated by converting rotational energy of the wheels into electric energy by the running motor, and the battery is charged by using the generated electric power, thereby acquiring a braking force. If the regenerative braking is carried out, a braking force is generated by the brake device, which is acquired by subtracting a regenerative braking force amount from a total braking force required for braking the vehicle, thereby carrying out brake regeneration cooperative control by using both the regenerative braking and the hydraulic braking.

Specifically, the brake ECU 100 receives a braking request, and then starts the brake regeneration cooperative control. The braking request is generated when the braking force needs to be applied to the vehicle, for example, when the driver carries out the depressing operation (hereinafter also simply referred to as "brake operation") on the brake pedal 10, or when automatic braking needs to be operated. In this case, the automatic braking may be operated in traction control, vehicle stability control, headway distance control, collision prevention control, and the like, and if control start conditions for those kinds of control are satisfied, the braking request is generated.

When the brake ECU 100 receives the braking request, the brake ECU 100 acquires, as the brake operation amount, at least one of the master cylinder pressure Pmc_FR detected by the master cylinder pressure sensor 102, the master cylinder pressure Pmc_FL detected by the master cylinder pressure sensor 103, and the pedal stroke Sm detected by the stroke sensor 105, and calculates a target braking force that increases along with an increase in the master cylinder pressure Pmc_FR, the master cylinder pressure Pmc_FL, and/or the pedal stroke Sm. Regarding the brake operation amount, the present invention may also be carried out so that the target braking force is calculated based on, for example, a pedal depressing force acquired by providing a depressing force sensor for detecting the pedal depressing force on the brake pedal 10 in place of the acquisition of the master cylinder pressure Pmc_FR, the master cylinder pressure Pmc_FL, and/or the pedal stroke Sm.

The brake ECU 100 transmits information representing the calculated target braking force to a hybrid ECU (not shown). The hybrid ECU calculates the braking force generated by the power regeneration of the target braking force, and transmits information representing the regenerative braking force, which is a calculation result, to the brake ECU 100. As a result, the brake ECU 100 calculates the target hydraulic pressure braking force, which is a braking force to be generated on the brake unit 40, by subtracting the regenerative braking force from the target braking force. In this case, the regenerative braking force generated by the power regeneration carried out by the hybrid ECU is changed not only by the rotational speed of the motor but also by the regenerative power control depending on a charged state (state of charge: SOC) of the battery. Thus, an appropriate target hydraulic pressure braking force can be calculated by subtracting the regenerative braking force from the target braking force.

Then, the brake ECU 100 calculates, based on the calculated target hydraulic pressure braking force, a target hydraulic pressure for each of the wheel cylinders 42 corresponding to the target hydraulic pressure braking force, and controls driving currents for the pressure increasing linear control valve 65A and the pressure reducing linear control valve 65B so that the control pressure Px (that is, the wheel cylinder pressures Pwc) become equal to the target hydraulic pressures. In other words, the brake ECU 100 controls the current supply amounts (current values) for the solenoids of the pressure increasing linear control valve 65A and the pressure reducing linear control valve 65B so that the control pressure Px detected by the control pressure sensor 104 follows the target hydraulic pressure.

As a result, in the linear control mode, the working fluid is supplied from the power hydraulic pressure generation device 30 via the pressure increasing linear control valve 65 and the main flow passage 52 to the respective wheel cylinders 42, resulting in increase of the wheel cylinder pressure Pwc to generate the braking forces on the wheels. Moreover, in the linear control mode, the working fluid is discharged from the wheel cylinders 42 via, for example, the main flow passage 52 and the pressure reducing linear control valve 65B to the reservoir flow passage 57, resulting in decrease of the wheel cylinder pressure Pwc to appropriately adjust the braking forces generated on the respective wheels.

Then, for example, when the brake operation by the driver is released, the current supply to the solenoids of all the electromagnetic valves (electromagnetic on-off valves) constructing the hydraulic pressure control valve device 50 is shut off, and all the electromagnetic valves are returned to original positions illustrated in FIG. 1. All the electromagnetic valves (electromagnetic on-off valves) are returned to the original positions in this way. Consequently, the hydraulic pressure (working fluid) in the wheel cylinder 42FR for the front right wheel is returned via the master cut valve 63 in the open state and the master pressure pipe 11 to the master cylinder 21 and the reservoir 22. The hydraulic pressure (working fluid) in the wheel cylinder 42FL for the front left wheel is returned via the master cut valve 64 in the open state, the communication passage 89 of the pressure increasing mechanism 80, the pilot passage 16, and the master pressure pipe 12 (master pressure pipe 12a) to the master cylinder 21 and the reservoir 22.

The hydraulic pressure (working fluid) in the wheel cylinder 42RR for the rear right wheel is returned via the holding valve 61 RR in the open state, the main flow passage 52, the holding valve 61 FL in the open state, the master cut valve 64 in the open state, the communication passage 89 of the pressure increasing mechanism 80, the pilot passage 16, and the master pressure pipe 12 (master pressure pipe 12a) to the master cylinder 21 and the reservoir 22. The hydraulic pressure (working fluid) in the wheel cylinder 42RL for the rear left wheel is returned via the pressure reducing valve 62RL in the open state and the reservoir flow passage 57 to the reservoir 22.

On this occasion, for the wheel cylinder 42RL, the holding valve 61 RL is constructed by a normally-closed electromagnetic on-off valve in order to prevent the working fluid in the master cylinder 21 and the pressure increasing mechanism 80 from being supplied when an abnormality occurs in a control system (electric system) described later. Therefore, when the brake operation is released, the wheel cylinder 42RL is shut off from the main flow passage 52, and cannot return the working fluid via the pressure increasing mechanism 80 to the master cylinder 21. In contrast, the pressure reducing valve 62RL is constructed by a normally-open electromagnetic on-off valve, and the working fluid in the wheel cylinder 42RL can be returned to the reservoir 22 via the pressure reducing valve 62RL. Moreover, if the pressure reducing valve is a normally-open electromagnetic on-off valve, a supply of a current to a solenoid needs to be continued in the linear control mode, and such a problem in that power consumption increases thus occurs. In this embodiment, however, the normally-open pressure reducing valve is only the one pressure reducing valve 62RL, and the increase in power consumption can thus be suppressed.

It should be noted that the present invention does not always need to carry out brake regeneration cooperative control, and it should be understood that the present invention can be applied to a vehicle on which the regenerative braking force is not generated. In this case, the target hydraulic pressure may directly be calculated based on the brake operation amount. The target hydraulic pressure is set by using a map, a calculation equation, or the like so as to have a larger value as the brake operation amount increases.

A description is now given of an example of the backup mode. In the brake device for a vehicle, the brake ECU 100 is configured to carry out a predetermined initial check. If, for example, an abnormality in the control system (electric system) such as a switching operation failure of the respective electromagnetic on-off valves and an operation abnormality of the brake ECU 100 itself, or a possibility of a leak of the working fluid is detected as a result of the initial check, the brake ECU 100 operates the brake device for a vehicle to generate braking forces on the wheels in the backup mode.

First, if an abnormality in the control system (electric system) is detected, the brake ECU 100 shuts off the current supply to all the electromagnetic valves (electromagnetic on-off valves), thereby returning all the electromagnetic valves (electromagnetic on-off valves) to original positions illustrated in FIG. 1. As a result, the pressure increasing linear control valve 65A and the pressure reducing linear control valve 65B are brought into the closed state by shutting off the current supply to the solenoids, and the power hydraulic pressure generation device 30 is shut off from the respective wheel cylinders 42 via the main flow passage 52. Moreover, the pressure increasing mechanism cut valve 90 is brought into the open state, and the pressure increasing mechanism 80 thus communicates to the accumulator 32. Moreover, the holding valves 61 FR and 61 RL are brought into the closed state, and the holding valves 61 FL and 61 RR are brought into the open state. As a result, the wheel cylinder 42FL for the front left wheel and the wheel cylinder 42RR for the rear right wheel communicate to each other via the main flow passage 52, and the wheel cylinder 42FR for the front right wheel and the wheel cylinder 42RL for the rear left wheel are shut off from the main flow passage 52.

When the driver carries out the depressing operation (brake operation) on the brake pedal 10 in this state, the working fluid in the pressure chambers 21a1 and 21b1 of the master cylinder 21 is pressurized. As a result, the hydraulic pressure (master cylinder pressure Pmc_FR) in the pressure chamber 21a1 can be supplied via the master pressure pipe 11, the master pressure flow passage 53, and the master cut valve 63 in the open state to the wheel cylinder 42FR for the front right wheel, thereby appropriately operating the brake unit 40FR.

On the other hand, the hydraulic pressure (master cylinder pressure Pmc_FL) in the pressure chamber 21 b1 is supplied via the master pressure pipe 12 (12a) and the pilot passage 16 to the pressure increasing mechanism 80, and the pressure increasing mechanism 80 starts operating. In other words, in the pressure increasing mechanism 80, the stepped piston 82 moves forward, the communication between the small diameter chamber 84 and the large diameter chamber 83 via the communication passage 89 is shut off by the valve opening member 88, and the hydraulic pressure in the small diameter chamber 84 increases. Moreover, when the valve opening member 88 moves forward, and the high pressure supply valve 86 is brought into the open state, the high pressure working fluid is supplied from the accumulator 32 to the high pressure chamber 85 via the pressure increasing mechanism cut valve 90 in the open state, and the accumulator pressure Pacc is transmitted to the small diameter chamber 84.

As a result, the hydraulic pressure (servo pressure) in the small diameter chamber 84 becomes higher than the master cylinder pressure Pmc_FL, is supplied to the wheel cylinder 42FL for the front left wheel via the master pressure pipe 12 (12b), the master pressure flow passage 54, and the master cut valve 64 in the open state, and is supplied to the wheel cylinder 42RR for the rear right wheel via the holding valve 61 FL, the main flow passage 52, and the holding valve 61 RR. Thus, the servo pressure higher than the master cylinder pressure Pmc_FL is supplied to the wheel cylinder 42FL for the front left wheel and the wheel cylinder 42RR for the rear right wheel, resulting in appropriate operations of the brake units 40FL and 40RR.

Moreover, the pressure pump 31 of the power hydraulic pressure generation device 30 is in a stop state in this state, and the hydraulic pressure (accumulator pressure Pacc) in the accumulator 32 thus gradually decreases. Therefore, when the accumulator pressure Pacc decreases to be equal to or less than the hydraulic pressure in the high pressure chamber 85, the check valve provided on the high pressure supply passage 15 prevents the working fluid from flowing from the high pressure chamber 85 to the accumulator 32. Thus, the stepped piston 82 is prevented from moving forward, the hydraulic pressure in the small diameter chamber 84 does not increase any more, and the pressure increasing mechanism 80 cannot provide the boost function any more. Then, when the pedal depressing force by the driver on the brake pedal 10 increases the hydraulic pressure (master cylinder pressure Pmc_FL) in the pressure chamber 21 b1 of the master cylinder 21 to be more than the hydraulic pressure in the small diameter chamber 84, the master cylinder pressure Pmc_FL is supplied to the wheel cylinder 42FL for the front left wheel and the wheel cylinder 42RR for the rear right wheel via the bypass passage 17, the master pressure pipe 12b, the master pressure flow passage 54, the master cut valve 64, the holding valve 61 FL, the main flow passage 52, and the holding valve 61 RR.

On this occasion, the holding valve 61 RL is in the closed state, and the hydraulic pressure (servo pressure or the master cylinder pressure Pmc_FL) in the pressure chamber 21 b1 is thus not supplied to the wheel cylinder 42RL for the rear left wheel via the main flow passage 52. This configuration is employed to prevent occurrence of the following problem. An amount of the working fluid which can be supplied from the one pressure chamber 21 b1 of the master cylinder 21 is limited, and hence, if the number of the wheel cylinders as supply destinations increases, the hydraulic pressure in the wheel cylinder cannot be sufficiently increased. Therefore, in this embodiment, the servo pressure (or master cylinder pressure Pmc_FL) is supplied to the wheel cylinders 42FL and 42RR for the two wheels (front left wheel and the rear right wheel) at positions diagonal to each other. As a result, the yaw (yaw moment) can be hardly generated, and the two brake units 40FL and 40RR can be appropriately operated. It should be noted that, as described above, the hydraulic pressure (master cylinder pressure Pmc_FR) is supplied from the pressure chamber 21 a1 of the master cylinder 21 to the wheel cylinder 42FR for the front right wheel via the master cut valve 63 in the open state.

As described above, in this embodiment, the hydraulic pressure (master cylinder pressures Pmc_FR and Pmc_FL) in the master cylinder 21 or the hydraulic pressure (servo pressure) via the pressure increasing mechanism 80 is supplied to the wheel cylinders 42FR, 42FL, and 42RR for the three wheels in an abnormal state of the control system (electric system), and the braking force for the entire vehicle can be increased compared with the case where the hydraulic pressure is supplied to the wheel cylinders for the two wheels. Then, while the pressure increasing mechanism 80 is operating, the servo pressure approximately equal to the master cylinder pressure Pmc_FL and higher than the master cylinder pressure Pmc_FR is supplied to the wheel cylinder 42FL for the front left wheel and the wheel cylinder 42RR for the rear right wheel, and thus the yaw (yaw moment) can be less generated.

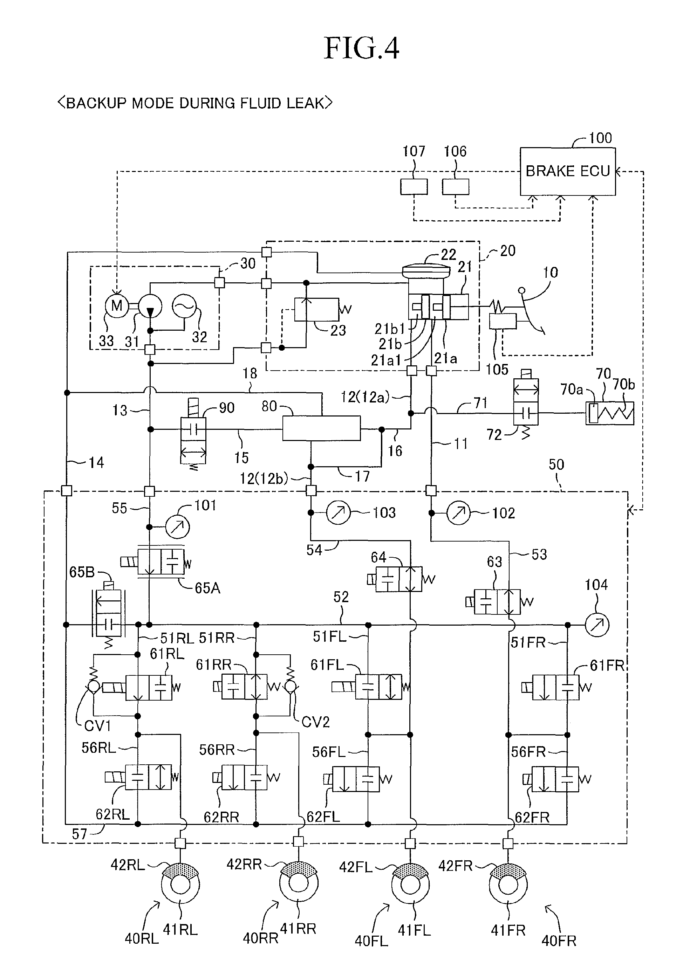

A description is now given of the backup mode when a possibility of the fluid leak is detected. When the brake ECU 100 detects a possibility of a fluid leak in the brake device for a vehicle, for example, based on a change (decrease) in the control pressure Px in the main flow passage 52 (corresponding to the wheel cylinder pressure Pwc) detected by the control pressure sensor 104, as illustrated in FIG. 4, the brake ECU 100 operates the respective electromagnetic on-off valves to open/close in principle. That is, the brake ECU 100 brings the holding valves 61 FR and 61 FL for the front right and left wheels into the closed state, brings the holding valves 61 RR and 61 RL for the rear right and left wheels into the open state, and brings the master cut valves 63 and 64 into the open state. Further, the brake ECU 100 brings the simulator cut valve 72 into the closed state, maintains the pressure increasing mechanism cut valve 90 in the closed state, and brings all the pressure reducing valves 62 into the closed state.

As a result, the wheel cylinders 42RR and 42RL for the rear right and left wheels communicate via the holding valves 61 RR and 61 RL, the main flow passage 52, the pressure increasing linear control valve 65A, the accumulator pressure flow passage 55, and the accumulator pressure pipe 13 to the pressure pump 31 and/or the accumulator 32 of the power hydraulic pressure generation device 30. Therefore, in the wheel cylinders 42RR and 42RL, the high accumulator pressure Pacc is adjusted as the upstream side hydraulic pressure by the pressure increasing linear control valve 65A and the pressure reducing linear control valve 65B on the upstream side of the holding valves 61 RR and 61 RL, and the upstream side hydraulic pressure is then transmitted to the wheel cylinders 42RR and 42RL on the downstream side of the holding valves 61 RR and 61 RL.

On the other hand, the wheel cylinder 42FR for the front right wheel communicates via the master cut valve 63, the master pressure flow passage 53, and the master pressure pipe 11 to the pressure chamber 21 a1 of the master cylinder 21, and the hydraulic pressure thereof becomes the master cylinder pressure Pmc_FR. In other words, in this state, the holding valve 61 FR prevents (shuts off) the transmission of the working fluid (that is, the master cylinder pressure Pmc_FR), which is directly transmitted from the pressure chamber 21a1 of the master cylinder 21 to the wheel cylinder 42FR, to the main flow passage 52 on the upstream side. Moreover, the wheel cylinder 42FL for the front left wheel communicates via the master cut valve 64, the master pressure flow passage 54, the master pressure pipe 12b, the pressure increasing mechanism 80, the pilot passage 16, and the master pressure pipe 12a to the pressure chamber 21 b1 of the master cylinder 21, and the hydraulic pressure thereof becomes the master cylinder pressure Pmc_FL (or the servo pressure as a result of the operation of the pressure increasing mechanism 80). In other words, on this occasion, the holding valve 61 FL prevents (shuts off) the transmission of the working fluid (that is, the master cylinder pressure Pmc_FL), which is directly transmitted from the pressure chamber 21b1 of the master cylinder 21 to the wheel cylinder 42FL, to the main flow passage 52.

In this way, when a possibility of the fluid leak in the brake device for a vehicle is detected, the holding valves 61 FR and 61 FL for the front right and left wheels are brought into the closed state (shutoff state). That is, the communication of the wheel cylinders 41 FR and 42FL to the main flow passage 52 is inhibited. As a result, the communication via the main flow passage 52 between the wheel cylinder 42FR and the wheel cylinder 42FL for the front right and left wheels is shut off, and the communication via the main flow passage 52 between the wheel cylinders 42FR and 42FL for the front right and left wheels, and the wheel cylinders 42RR and 42RL for the rear right and left wheels is shut off. Therefore, if the possibility of the fluid leak in the brake device for a vehicle is detected, the wheel cylinders 42 for the front wheels and the rear wheels are shut off from each other, and the wheel cylinders 42 for the front left wheel and the front right wheel are shut off from each other on the front wheel side, so that the three brake systems for the front right wheel, the front left wheel, and the rear right and left wheels are isolated from one another. As a result, even if a fluid leak occurs in one of those three brake systems, the other brake systems are not affected.

A specific description is now given of this configuration assuming a case where, for example, a fluid leak occurs from the wheel cylinder 42FL to the outside, or an abnormality occurs in the sealing performance of the pressure reducing valve 62FL in the brake unit 40FL for the front left wheel. In this case, the brake ECU 100 can detect a possibility of the fluid leak occurring in the brake device for a vehicle based on, for example, a decrease in the accumulator pressure Pacc detected by the accumulator pressure sensor 101 or a decrease in the control pressure Px (corresponding to the wheel cylinder pressure Pwc) detected by the control pressure sensor 104 in the linear control mode, but the brake ECU 100 cannot identify a location (brake system) at which the fluid leak occurs. However, as described above, when there is a possibility of the fluid leak, the brake ECU 100 isolates the three brake systems for the front right wheel, the front left wheel, and the rear right and left wheels from one another. In this manner, even if a fluid leak actually occurs from the wheel cylinder 42FL for the front left wheel to the outside, or an abnormality actually occurs in the sealing performance of the pressure reducing valve 62FL, the master cylinder pressure Pmc_FR can be supplied to the other wheel, namely, the front right wheel, thereby generating an appropriate braking force. The control pressure Px (wheel cylinder pressure Pwc) acquired by controlling (adjusting) the accumulator pressure Pacc can be supplied to the rear right and left wheels, thereby generating appropriate braking forces.

However, when a possibility of the fluid leak occurs, as described above, the brake ECU 100 isolates the three brake systems for the front right wheel, the front left wheel, and the rear right and left wheels from one another. In this manner, even if a fluid leak actually occurs from the wheel cylinder 42FL for the front left wheel to the outside, or an abnormality occurs in the sealing performance of the pressure reducing valve 62FL, the master cylinder pressure Pmc_FR can be supplied to the other wheel, namely, the front right wheel, thereby generating an appropriate braking force. The control pressure Px (wheel cylinder pressure Pwc) acquired by controlling (adjusting) the accumulator pressure Pacc can be supplied to the rear right and left wheels, thereby generating appropriate braking forces.

Moreover, when a possibility of a fluid leak in the brake device for a vehicle is detected as described above, the brake ECU 100 maintains the pressure increasing mechanism cut valve 90 in the closed state. As a result, the communication (connection) between the accumulator 32 of the power hydraulic pressure generation device 30 and the high pressure chamber 85 of the pressure increasing mechanism 80 via the high pressure supply passage 15 is shut off, and the transmission of the hydraulic pressure (accumulator pressure Pacc), namely, the communication of the working fluid from the accumulator 32 to the pressure increasing mechanism 80 is inhibited. Thus, even if a fluid leak occurs from the wheel cylinder 42FL for the front left wheel communicating to the pressure increasing mechanism 80 to the outside or an abnormality occurs in sealing performance of the pressure reducing valve 62FL, the communication of the working fluid from the accumulator 32 via the pressure increasing mechanism 80 does not occur.

As a result, for example, the communication of the working fluid from the high pressure chamber 85 of the pressure increasing mechanism 80 to the small diameter chamber 84 side, namely, the consumption of the accumulator pressure Pacc accumulated in the accumulator 32 by the pressure increasing mechanism 80 can be securely prevented. Thus, the accumulator pressure Pacc can be supplied to the wheel cylinders 42RR and 42RL for the rear right and left wheels via the pressure increasing linear control valve 65A in a concentrated manner. In other words, the pressure increasing mechanism cut valve 90 is maintained in the closed state, the control pressure Px (wheel cylinder pressure Pwc) acquired by adjusting (increasing) the accumulator pressure Pacc can thus be supplied to the rear right and left wheels without wastefully reducing the accumulator pressure Pacc of the accumulator 32, and the appropriate braking forces can be generated.

Incidentally, even when a possibility of the fluid leak in the brake device for a vehicle is detected, it is difficult to identify a brake system actually presenting the brake leak as described above, and the brake ECU 100 thus controls the operations of the holding valves 61 and the pressure reducing valves 62 in response to the brake operation by the driver on the brake pedal 10. It should be noted that, in the following description, the brake system for operating the brake unit 40FR on the front right wheel side is referred to as front-right-wheel side brake system, the brake system for operating the brake unit 40FL on the front left wheel side is referred to as front-left-wheel side brake system, and the brake system for operating the brake units 40RR and 40RL on the rear right and left wheel sides is referred to as rear-right-and-left-wheel side brake system.

When execution of a widely-known antiskid brake control for suppressing an excessive slip in a fore-and-aft direction of the each wheel to which the braking force is applied based on a wheel speed Vx detected by the wheel speed sensor 106 is necessary, for example, the brake ECU 100 controls current supply to the respective solenoids of the holding valves 61 and the pressure reducing valves 62 by following the antiskid brake control, thereby shifting each of the holding valves 61 and the pressure reducing valves 62 to the open state or the closed state. In other words, the brake ECU 100, in principle, controls each of the holding valve 61 and the pressure reducing valves 62 to shift to the open state or the closed state depending on a change required for the wheel cylinder pressure Pwc in the wheel cylinder 42, more specifically, the increase, the maintaining, or the decrease in the wheel cylinder pressure Pwc.

Specifically, in the front-right-wheel side brake system and the front-left-wheel side brake system, when the brake ECU 100 uses the accumulator pressure Pacc from the accumulator 32 to increase the wheel cylinder pressures Pwc in the wheel cylinders 42FR and 42FL in the linear control mode in response to the driver's operation of depressing the brake pedal 10, the brake ECU 100 shifts the holding valves 61 FR and 61 FL to the open states (communication states), and shifts the pressure reducing valves 62FR and 62FL to the closed states, and when the brake ECU 100 uses the master cylinder pressures Pmc_FR and Pmc_FL from the master cylinder 21 to increase the wheel cylinder pressures Pwc in the wheel cylinders 42FR and 42FL in the backup mode, the brake ECU 100 shifts the holding valves 61 FR and 61 FL to the closed states (shutoff states), and shifts the pressure reducing valves 62FR and 62FL to the closed states. Moreover, in the rear-right-and-left-wheel side brake system, when the brake ECU 100 supplies the accumulator pressure Pacc from the accumulator 32 to the wheel cylinders 42RR and 42RL to increase the wheel cylinder pressures Pwc in response to the driver's operation of depressing the brake pedal 10, the brake ECU 100 shifts the holding valves 61 RR and 61 RL to the open states (communication states), and shift the pressure reducing valves 62FR and 62RL to the closed states.

Moreover, in the front-right-wheel side brake system and the front-left-wheel side brake system, when the brake ECU 100 maintains the wheel cylinder pressures Pwc in the wheel cylinders 42FR and 42FL in response to a driver's operation of holding the brake pedal 10, the brake ECU 100 maintains the holding valves 61 FR and 61 FL in the closed states (shutoff states), and maintains the pressure reducing valves 62FR and 62FL in the closed states. Moreover, in the rear-right-and-left-wheel side brake system, when the brake ECU 100 maintains the wheel cylinder pressures Pwc in the wheel cylinders 42RR and 42RL in response to the driver's operation of holding the brake pedal 10, the brake ECU 100 maintains the holding valves 61 RR and 61 RL in the closed states (shutoff states), and maintains the pressure reducing valves 62RR and 62RL in the closed states.

Further, in the front-right-wheel brake system, the front-left-wheel brake system, and the rear-right-and-left-wheel side brake system, when the brake ECU 100 decreases the wheel cylinder pressure Pwc in each wheel cylinder 42 to "0" in response to the driver's operation of releasing the brake pedal 10, the brake ECU 100 controls, in principle, at least one of the holding valve 61 or the pressure reducing valve 62 into the open state, thereby finally returning the holding valve 61 and the pressure reducing valve 62 to the original positions. In other words, in this case, the brake ECU 100 controls at least one of the holding valve 61 FR or the pressure reducing valve 62FR in the front-right-wheel side brake system into the open state to quickly decrease the wheel cylinder pressure Pwc in the wheel cylinder 42FR, thereby finally shifting the holding valve 61 FR and the pressure reducing valve 62FR to the closed states.

Moreover, the brake ECU 100 controls at least one of the holding valve 61 FL or the pressure reducing valve 62FL in the front-left-wheel side brake system into the open state to quickly decrease the wheel cylinder pressure Pwc in the wheel cylinder 42FL, thereby finally shifting the holding valve 61 FL to the open state and shifting the pressure reducing valve 62FL to the closed state. Moreover, the brake ECU 100 controls at least one of the holding valves 61 RR and 61 RL or the pressure reducing valves 62RR and 62RL in the rear-right-and-left-wheel side brake system into the open state to quickly decrease the wheel cylinder pressures Pwc in the wheel cylinders 42RR and 42RL, thereby finally shifting the holding valve 61 RR to the open state, shifting the pressure reducing valve 62RR to the closed state, shifting the holding valve 61 RL to the closed state, and shifting the pressure reducing valve 62RL to the open state.

Incidentally, when the wheel cylinder pressure Pwc is decreased in response to the driver's operation of releasing the brake pedal 10, as described above, in principle, at least one of the holding valve 61 or the pressure reducing valve 62 is controlled to operate to shift to the open state. In this case, for example, when an operation that is different from the operation of releasing the brake pedal 10 to intend to bring the wheel cylinder pressure Pwc to "0", and is an operation toward the return direction of intending to simply decrease the current wheel cylinder pressure Pwc (return operation) is carried out by the driver on the brake pedal 10 on which the holding operation is being carried out, if all the holding valves 61 and the pressure reducing valves 62 respectively operate as in the release operation, operation sounds are generated by the operations, thereby making the driver and the occupants of the vehicle liable to feel a sense of discomfort. Therefore, when the driver's operation of returning the brake pedal 10 is carried out, that is, when the driver requests a decrease in the wheel cylinder pressures Pwc to a certain degree, it is effective to decrease the number of the holding valves 61 and the pressure reducing valves 62 to be operated.

In this respect, the check valves CV1 and CV2 are respectively provided in parallel with the holding valves 61 RR and 61 RL in the rear-right-and-left-wheel side brake system in the brake device for a vehicle of this embodiment. As a result, the number of holding valves 61 and the pressure reducing valves 62 to be operated in response to the driver's operation of returning the brake pedal 10 can be decreased. A specific description is now given of this point.

When the brake ECU 100 determines, for example, based on the changes in the master cylinder pressures Pmc_FR and Pmc_FL detected by the master cylinder pressure sensors 102 and 103 and/or the change in the pedal stroke Sm of the brake pedal 10 detected by the stroke sensor 105, that the driver has carried out the return operation on the brake pedal 10, the brake ECU 100 first calculates a target hydraulic pressure Pwc_d corresponding to the return operation on the brake pedal 10. Then, the brake ECU 100 carries out, for example, current supply control for the solenoid of the pressure reducing linear control valve 65B so that the control pressure Px in the main flow passage 52 matches the calculated target hydraulic pressure Pwc_d.

On this occasion, the check valves CV1 and CV2 provided for the rear-right-and-left-wheel side brake system respectively permit communication of the working fluid from the wheel cylinder 42RR and 42RL sides toward the main flow passage 52. In other words, the provided check valves CV1 and CV2 permit the flows of the working fluid from the wheel cylinders 42RR and 42RL toward the main flow passage 52 only when the wheel cylinder pressures Pwc in the wheel cylinders 42RR and 42RL are respectively more than the control pressure Px in the main flow passage 52. As a result, the wheel cylinder pressures Pwc in the wheel cylinders 42RR and 42RL can be respectively decreased to pressures equal to the control pressure Px in the main flow passage 52.

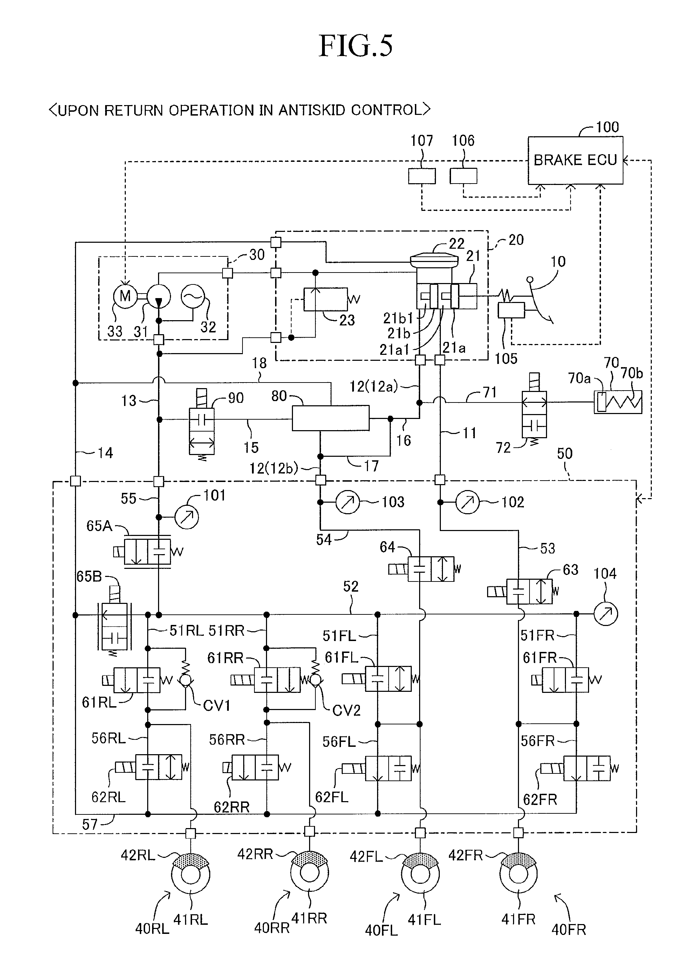

Specifically, when the hydraulic pressure in the main flow passage 52 is currently decreased to the target hydraulic pressure Pwc_d in response to the driver's operation of returning the brake pedal 10, the wheel cylinder pressures Pwc in the wheel cylinders 42RR and 42RL become relatively higher than the target hydraulic pressure Pwc_d, and thus the working fluid in the wheel cylinders 42RR and 42RL flows out via the check valves CV1 and CV2 to the main flow passage 52. Thus, as a result of the outflows of the working fluid from the wheel cylinders 42RR and 42RL, the wheel cylinder pressures Pwc are decreased until the cylinder pressures Pwc match (balance with) the target hydraulic pressure Pwc_d. As a result, when the driver's operation of returning the brake pedal 10 is carried out, as illustrated in FIG. 5, the wheel cylinder pressures Pwc in the wheel cylinders 42RR and 42RL can be quickly decreased without necessity of operating the holding valves 61 RR and 61 RR and the pressure reducing valves 61 RR and 62RL in the closed states to shift to the open states in the rear-right-and-left-wheel side brake system.

Incidentally, check valves corresponding to the check valves CV1 and CV2 in the rear-right-and-left-wheel side brake system are not provided in the front-right-wheel side brake system and the front-left-wheel side brake system. This is because, in the front-right-wheel side brake system and the front-left-wheel side brake system, during the linear control, the control pressure Px in the main flow passage 52 on the upstream side of the holding valves 61 FR and 61 RL needs to be maintained equal to or more than the wheel cylinder pressures Pwc in the wheel cylinders 42FR and 42FL on the downstream side. On the other hand, in the backup mode, when the wheel cylinder pressures Pwc in the wheel cylinders 42FR and 42FL on the downstream side of the holding valves 61 FR and 61 FL are equal to or more than the control pressure Px in the main flow passage 52 on the upstream side, this state needs to be maintained. Thus, in order to maintain the required relationship in the hydraulic pressure between the upstream side and the downstream side, which is different between the linear control mode and the backup mode, check valves functioning similarly to the check valves CV1 and CV2 in the rear-right-and-left-wheel side brake system cannot respectively be provided in parallel with the holding valves 61 FR and 61 FL in the front-right-wheel side brake system and the front-left-wheel side brake system. It should be noted that the front right and left wheel side and the rear right and left wheel side can be securely separated from each other in the backup mode by establishing the required relationship in the hydraulic pressure between the upstream side and the downstream side, which is different between the linear control mode and the backup mode. For example, the accumulator pressure Pacc can be supplied only to the rear-right-and-left-wheel side brake system.

Therefore, when the driver carries out the return operation on the brake pedal 10, by following the principle, for example, as illustrated in FIG. 5, the pressure reducing valve 62FR among the holding valve 61 FR and the pressure reducing valve 62FR is shifted to the open state, and the pressure reducing valve 62FL among the holding valve 61 FL and the pressure reducing valve 62FL is shifted to the open state in the front-right-wheel side brake system and the front-left-wheel side brake system in which the check valves are not provided. As a result, the wheel cylinder pressures Pwc in the wheel cylinders 42FR and 42FL can quickly be decreased to the target hydraulic pressure Pwc_d.

On this occasion, when the driver carries out the release operation or the return operation on the brake pedal 10, at least the holding valves 61 may be controlled into the open state in the front-right-wheel side brake system, the front-left-wheel side brake system, and the rear-right-and-left-wheel side brake system. In this case, for example, in the front-right-wheel side brake system and the front-left-wheel side brake system in the backup mode, the wheel cylinders 42FR and 42FL are directly connected to the master cylinder 21, and the high master cylinder pressures Pmc_FR and Pmc_FL are thus supplied thereto. Thus, for example, when the driver carries out the release operation on the brake pedal 10, and the holding valves 61 FR and 61 FL are thus controlled into the open states, the working fluid may flow from the master cylinder 42FR and 42FL sides via the holding valves 61 FR and 61 FL into the main flow passage 52, that is, the high master cylinder pressures Pmc_FR and Pmc_FL may be transmitted to the main flow passage 52.

Under the state in which, as a result of the shifts of the holding valves 61 FR and 61 FL to the open states, the high master cylinder pressures Pmc_FR and Pmc_FL are transmitted to the main flow passage 52, that is, the control pressure Px in the main flow passage 52 changes to the high pressure side, the control pressure Px, which has changed to the high pressure side, may be transmitted to the rear-right-and-left-wheel side brake system communicating to the main flow passage 52, thereby influencing the rear-right-and-left-wheel side brake system. Specifically, for example, when the holding valves 61 RR and 1 RL in the rear-right-and-left-wheel side brake system are controlled into the open states, the control pressure Px in the main flow passage 52 has been changed to the high pressure side, and the wheel cylinder pressures Pwc in the wheel cylinders 42RR and 42RL may change to the high pressure side.

In this case, particularly, under a state in which the antiskid brake control is carried out, it is not preferred that the above-mentioned change in the wheel cylinder pressures Pwc in the wheel cylinders 42RR and 42RL to the high pressure side is generated in response to the driver's operation of releasing or returning the brake pedal 10. Therefore, particularly while the operations of the respective holding valves 61 and the respective pressure reducing valves 62 are controlled by following the antiskid brake control, when the driver's operation of releasing or returning the brake pedal 10 is carried out, the brake ECU 100 is configured to suppress the change in the control pressure Px to the high pressure side in the main flow passage 52 caused by the shifts to the open states of the holding valves 61 FR and 61 FL respectively in the front-right-wheel side brake system and the front-left-wheel side brake system.

Specifically, the brake ECU 100 maintains elements that can decrease the control pressure Px in the main flow passage 52, namely the pressure reducing linear control valve 65B and the pressure pump 31 (motor 33), in an operation preparation state for reducing the control pressure Px in the main flow passage 52 at a time of or before opening the holding valves 61 FR and 61 FL. A specific description is now given of the operation preparation state.

First, the operation preparation state of the pressure reducing linear control valve 65B for permitting or shutting off the communication between the main flow passage 52 and the reservoir flow passage 57 is a state in which current application control is carried out so that a predetermined current (opening current) is continuously supplied to the solenoid to quickly open the pressure reducing linear control valve 65B when the control pressure Px in the main flow passage 52 changes to the high pressure side. On this occasion, a magnitude of the predetermined current is a magnitude of the current that generates an "electromagnetic attraction force" slightly more than a "closing force (=spring force-differential pressure force)" in the pressure reducing linear control valve 65B, and is thus such a magnitude of the current that the pressure reducing linear control valve 65B can automatically (without electromagnetic control) shift to the open state through a "differential pressure force" at a time when the control pressure Px in the main flow passage 52 (=wheel cylinder pressures Pwc) becomes larger than the target hydraulic pressure Pwc_d. A detailed description is now given of this current application control.

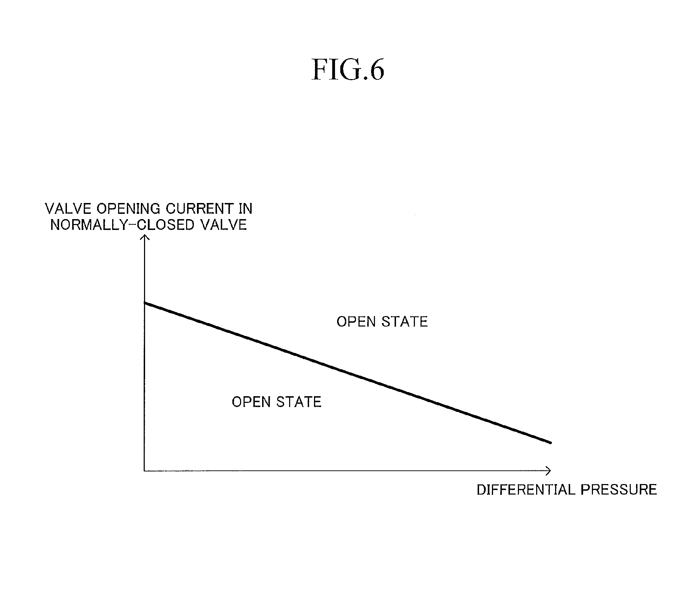

The pressure reducing linear control valve 65B, which is a normally-closed electromagnetic linear control valve, is shifted to any one of the open state and the closed state depending on the relationship between the magnitude of the "valve closing force" determined by "spring force-differential pressure force" and the magnitude of "electromagnetic attraction force" generated by the current supply to the solenoid as described above. In other words, the pressure reducing linear control valve 65B shifts to the open state when the "electromagnetic attraction force" by the solenoid is even slightly larger than the "valve closing force", and maintains the closed state when the "electromagnetic attraction force" is equal to or less than the "valve closing force". In this case, if the "spring force" is constant, the relationship between a magnitude of a differential pressure between a primary side (inlet side) and a secondary side (outlet side), which generates the "differential pressure force", and a magnitude of the current supplied to the solenoid, which generates the "electromagnetic attraction force", can be shown, for example, in FIG. 6. It should be noted that, in the graph of FIG. 6, the current determined by the differential pressure represents the opening current for finally shifting the closed state to the open state.

On this occasion, based on the relationship between the differential pressure and the current (opening current) shown in FIG. 6, when a current more than the opening current determined depending on an arbitrary differential pressure is supplied to the solenoid, the "electromagnetic attraction force" becomes more than the "valve closing force (=spring force-differential pressure force)", and thus the pressure reducing linear control valve 65B shifts to the open state. Moreover, when a current equal to or less than the opening current determined depending on an arbitrary differential pressure is supplied to the solenoid, the "electromagnetic attraction force" is equal to or less than the "valve closing force (=spring force-differential pressure force)", and thus the pressure reducing linear control valve 65B is maintained in the closed state.

Conversely, under a state in which an arbitrary opening current is supplied to the solenoid to generate a predetermined "electromagnetic attraction force", when a differential pressure larger than a differential pressure corresponding to the arbitrary opening current is generated, the predetermined "electromagnetic attraction force" becomes relatively larger than the "valve closing force (=spring force-differential pressure force)", and thus the pressure reducing linear control valve 65B is shifted to the open state. When a differential pressure equal to or less than the differential pressure corresponding to the arbitrary opening current is generated, the predetermined "electromagnetic attraction force" becomes relatively smaller than the "valve closing force (=spring force-differential pressure force)", and thus the pressure reducing linear control valve 65B is shifted to the closed state. In other words, under a state in which a constant opening current is supplied to continuously generate the predetermined "electromagnetic attraction force", the pressure reducing linear control valve 65B can automatically be shifted to the open state or the closed state without additionally depending on electromagnetic opening/closing drive control in accordance with the magnitude of the differential pressure generated between the upstream side (control pressure Px in the main flow passage 52) and the downstream side (corresponding to the reservoir pressure) of the pressure reducing linear control valve 65B.

More specifically, under a state in which the predetermined "electromagnetic attraction force" is generated by supplying an arbitrary opening current, when a differential pressure more than a magnitude of a differential pressure corresponding to the arbitrary opening current, which is determined by the relationship shown in FIG. 6, is generated on the pressure reducing linear control valve 65B, the pressure reducing linear control valve 65B is automatically shifted to the open state by the generated differential pressure (more specifically, "differential pressure force") without electromagnetic opening control for the pressure reducing linear control valve 65B. On the other hand, when a differential pressure, which is equal to or larger than the magnitude of the differential pressure corresponding to the arbitrary opening current determined by the relationship shown in FIG. 6, is generated in the pressure reducing linear control valve 65B, the pressure reducing linear control valve 65B is automatically shifted to the closed state by the differential pressure (more specifically, "differential pressure force") generated without electromagnetically controlling the pressure reducing linear control valve 65B into the closed state. It should be noted that, in the pressure reducing linear control valve 65B, the hydraulic pressure on the primary side (inlet side), which is the upstream side, is the control pressure Px in the main flow passage 52 detected by the control pressure sensor 104, and the hydraulic pressure on the secondary side (outlet side), which is the downstream side, is the atmospheric pressure (=reservoir pressure), which is a lower pressure. Thus, the differential pressure in the pressure reducing linear control valve 65B is determined by subtracting the atmospheric pressure from the control pressure Px, that is, determined as the control pressure Px.

As a result, the brake ECU 100 sets the detected control pressure Px when or before the holding valves 61 FR and 61 FL open to a target hydraulic pressure P* in the main flow passage 52, and then determines and continuously supplies an opening current corresponding to the target hydraulic pressure P* to the pressure reducing linear control valve 65B based on the relationship shown in FIG. 6. As a result, when a state in which the control pressure Px in the main flow passage 52 is more than the target hydraulic pressure P* is generated through the shifts of the holding valves 61 FR and 61 FL to the open states, the relationship "differential pressure (Px)>target hydraulic pressure (P*)" is satisfied in the pressure reducing linear control valve 65B, and thus the pressure reducing linear control valve 65B is automatically shifted to the open state. Conversely, regardless of whether the holding valves 61 FR and 61 FL are shifted to the open states or not, when the state in which the control pressure Px in the main flow passage 52 is equal to or less than the target hydraulic pressure P* is generated, the relationship "differential pressure (Px)≤target hydraulic pressure (P*)" is satisfied in the pressure reducing linear control valve 65B, and thus the closed state is automatically maintained.

Therefore, for example, when the operations of the respective holding valves 61 and the respective pressure reducing valves 62 are controlled by following the antiskid brake control, under a state in which the driver carries out the operation of releasing or returning the brake pedal 10 and the control pressure Px in the main flow passage 52 is thus more than the target hydraulic pressure P*, the pressure reducing linear control valve 65B is automatically shifted to the open state only through the brake ECU 100 supplying the current corresponding to the target differential pressure (P*) to the solenoid of the pressure reducing linear control valve 65B due to the state in which the generated differential pressure (Px) is more than the target differential pressure (P*). Thus, the pressure reducing linear control valve 65B can be automatically (that is, without additional electromagnetic on-off drive control) and quickly shifted from the closed state to the open state, thereby responsively suppressing the change in the wheel cylinder pressures Pwc in the rear-right-and-left-wheel side brake system connected to the main flow passage 52 to the high pressure side. As a result, the wheel cylinder pressures Pwc in the wheel cylinders 42RR and 42RL in the rear-right-and-left-wheel side brake system can be stabilized without a change before, during, and after the antiskid brake control, to thereby effectively suppress changes in the braking forces generated on the wheels.

Moreover, the operation preparation state of the motor 33 of the pressure pump 31 that constructs the power hydraulic pressure generation device 30 is a state in which the current supplied to the motor 33 is controlled so as to decrease the control pressure Px in the main flow passage 52 before the holding valves 61 FR and 61 FL are opened. Specifically, for example, under a state in which the brake ECU 100 is driving the motor 33 of the pressure pump 31 in order to increase the accumulator pressure Pacc by following the antiskid brake control, when the holding valves 61 FR and 61 FL are opened in response to the driver's operation of releasing or returning the brake pedal 10, the drive of the motor 33 is stopped before the holding valves 61 FR and 61 FL are opened. In other words, the brake ECU 100 stops the drive of the motor 33 before the holding valves 61 FR and 61 FL are opened to inhibit the pressure pump 31 from increasing the pressure of the working fluid, thereby preventing the control pressure Px in the main flow passage 52 from increasing.

Alternatively, as described above, under the state in which the arbitrary opening current is supplied to the solenoid of the pressure reducing linear control valve 65B, which is a normally-closed electromagnetic linear control valve, to thereby generate the predetermined "electromagnetic attraction force", when a differential pressure more than the differential pressure corresponding to the arbitrary opening current is generated, the "electromagnetic attraction force" becomes relatively larger than the "valve closing force", and thus the pressure reducing linear control valve 65B is shifted from the closed state to the open state. Therefore, before the holding valves 61 FR and 61 FL are opened, the brake ECU 100 may, for example, temporarily drive the motor 33, namely the pressure pump 31 to increase the control pressure Px in the main flow passage 52, thereby shifting the pressure reducing linear control valve 65B to the open state for actively reducing the control pressure Px in the main flow passage 52. As a result, even when the holding valves 61 FR and 61 FL are opened in response to the driver's operation of releasing or returning the brake pedal 10 so that the wheel cylinder pressure Pwc in the main flow passage 52 is increased, changes in the wheel cylinder pressures Pwc in the wheel cylinders 42RR and 42RL in the rear-wheel side brake system can be effectively suppressed.

On this occasion, the electromagnetic on-off valve usually has a hysteresis characteristic between the open state and the closed state. Therefore, according to this embodiment, the brake ECU 100 opens the normally-open holding valve 61 FL in response to the driver's operation of releasing or returning the brake pedal 10, and then increases the opening current supplied to the solenoid of the holding valve 61 FL so as to securely close the holding valve 61 FL. As a result, the normally-open holding valve 61 FL can be securely shifted from the open state to the closed state, to thereby securely shut off the main flow passage 52 and the wheel cylinder 42FL.

On the other hand, according to this embodiment, the brake ECU 100 opens the normally-closed holding valve 61 FR in response to the driver's operation of releasing or returning the brake pedal 10, and then decreases the opening current supplied to the solenoid of the holding valve 61 FR so as to securely close the holding valve 61 FR. As a result, the normally-closed holding valve 61 FR can be securely shifted from the open state to the closed state, to thereby securely shut off the main flow passage 52 and the wheel cylinder 42FR.

As appreciated from the description above, according to this embodiment, the check valves CV1 and CV2 can respectively be provided in parallel with the holding valves 61 RR and 61 RL provided in the rear-right-and-left-wheel side brake system configured so that the control pressure Px in the main flow passage 52 is always equal to or more than the wheel cylinder pressures Pwc in the wheel cylinders 42RR and 42RL for permitting only the communication from the downstream side (wheel cylinders 42RR and 42RL) toward the upstream side (main flow passage 52), thereby reducing the wheel cylinder pressures Pwc in the wheel cylinders 42RR and 42RL. As a result, when the driver carries out the operation of releasing or returning the brake pedal 10 on which the depressing operation has been carried out by the driver under the state in which the holding valves 61 RR and 61 RR are maintained in the closed state by following the antiskid control, the wheel cylinder pressures Pwc in the wheel cylinders 42RR and 42RL can be quickly decreased via the check valves CV1 and CV2 provided in parallel without shifting the holding valves 61 RR and 61 RL from the closed states to the open states.

In other words, for example, under the state in which the wheel cylinder pressures Pwc are maintained by following the antiskid control, when the driver carries out at least the return operation on the brake pedal 10 on which the depressing operation has been carried out, the brake ECU 100 operates one of the holding valve 61 and the pressure reducing valve 62 on each of the front right and left wheel sides, each of which does not include a check valve in parallel, so as to shift from the closed state to the open state in order to decrease the wheel cylinder pressures Pwc in the wheel cylinders 42. On the other hand, the holding valves 61 RR and 61 RL respectively including the check valves CV1 and CV2 provided in parallel can permit the flows of the working fluid from the downstream side (wheel cylinders 42RR and 42RL) to the upstream side (main flow passage 52) so that the hydraulic pressure on the upstream side is always higher than the wheel cylinder pressures Pwc on the downstream side. Therefore, the brake ECU 100 can operate, for example, the pressure reducing linear control valve 65B to decrease the hydraulic pressure in the main flow passage 52 on the upstream side, thereby decreasing the wheel cylinder pressures Pwc in the wheel cylinders 42RR and 42RL respectively via the check valves CV1 and CV2 without operating the holding valves 61 R and 61 RL to shift to the open states.

Thus, in the brake device for a vehicle of this embodiment, the number of electromagnetic valves (electromagnetic on-off valves) to be operated to decrease the wheel cylinder pressures Pwc in the wheel cylinders 42 can be decreased. As a result, the driver (occupant) is less liable to sense operation sounds caused by the operations of the electromagnetic valves (electromagnetic on-off valves), and excellent brake operation feeling can thus be secured.

Moreover, when the brake ECU 100 controls the holding valves 61 from the closed states to the open states in response to the return operation on the brake pedal 10 on which the depressing operation has been carried out by the driver, for example, during the antiskid control or in the backup mode, the brake ECU 100 can maintain the pressure reducing linear control valve 65B and the motor 33 of the pressure pump 31 in the operation preparation state in order to quickly suppress the change in the control pressure Px (upstream side hydraulic pressure) in the main flow passage 52 to the high pressure side generated as a result of the shift of the holding valves 61 to the open states. As a result, the change in the hydraulic pressure Px (upstream side hydraulic pressure) in the main flow passage 52 to the high pressure side can be securely prevented from being transmitted to the wheel cylinder pressures Pwc in the other brake system (specifically, the rear-right-and-left-wheel side brake system) connected to the main flow passage 52. Thus, the driver can operate the brake pedal 10 while sensing excellent brake operation feeling.

### <Modified example>

The above-mentioned embodiment is carried out by providing the holding valve 61 FR in the front-right-wheel side brake system, the holding valve 61 FL in the front-left-wheel side brake system, and the holding valves 61 RR and 61 RL in the rear-right-and-left-wheel side brake system. As a result of the holding valves 61 provided on the respective brake systems, for example, when the antiskid brake control or the like is carried out, the holding valves 61 can permit the communication between the main flow passage 52 (upstream side) and the wheel cylinders 42 (downstream side), thereby increasing the wheel cylinder pressures Pwc in the wheel cylinders 42, and the holding valves 61 can inhibit the communication between the main flow passage 52 (upstream side) and the wheel cylinders 42 (downstream side), thereby maintaining the wheel cylinder pressures Pwc in the wheel cylinders 42.

Moreover, when a possibility of the fluid leak is detected, the communication via the main flow passage 52 between the front right and left wheel cylinders 42FR and 42FL is shut off, and the communication via the main flow passage 52 between the front right and left wheel cylinders 42FR and 42FL and the rear right and left wheel cylinders 42RR and 42RL is shut off by maintaining the holding valves 61 FR and 61 FL provided in the front-right-wheel side brake system and the front-left-wheel side brake system in the closed states. Thus, the holding valves 61 can isolate the three brake systems for the front right wheel, the front left wheel, and the rear right and left wheels from one another, and even when a fluid leak actually occurs in any one of those three brake systems, the fluid leak can be prevented from influencing the other brake systems.

Further, the above-mentioned embodiment is carried out by providing the check valves CV1 and CV2 for the pressure decrease respectively in parallel with the holding valves 61 RR and 61 RL in the rear-right-and-left-wheel side brake system. As a result, when the driver's operation of returning the brake pedal 10 is carried out during the antiskid control, the master cylinder pressures Pwc in the master cylinders 42RR and 42RL can be decreased through the communication of the working fluid via the check valves CV1 and CV2 as a result of the pressure decreased in the main flow passage 52 without operating the holding valves 61 RR and 61 RL and the pressure reducing valves 62RR and 62RL in the rear-right-and-left-wheel side brake system.

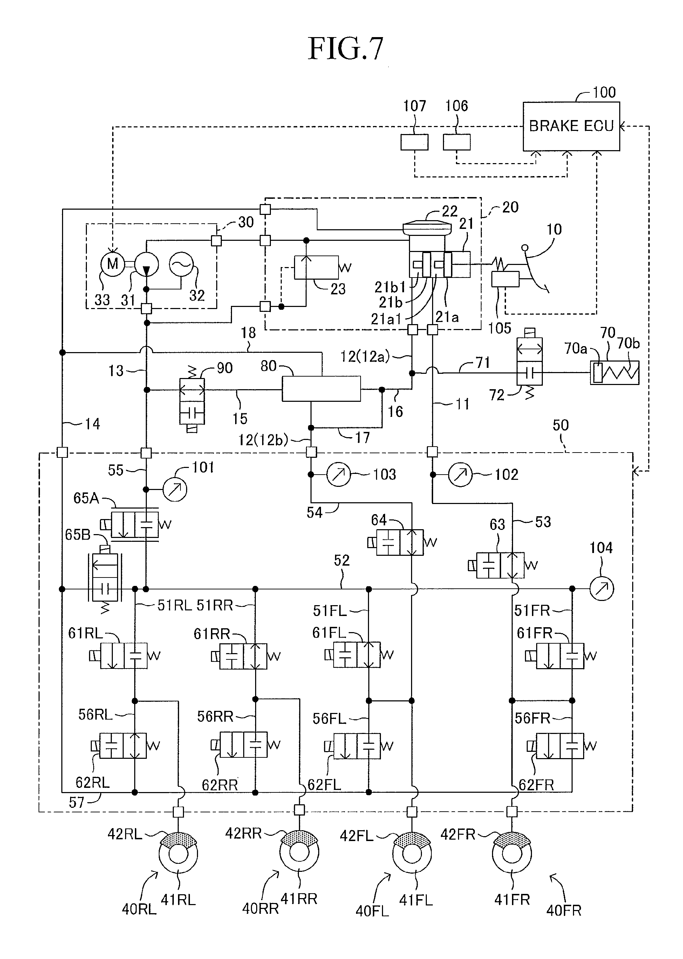

Incidentally, as illustrated in FIG. 7, check valves functioning in the same way as the check valves CV1 and CV2 for the pressure decrease may not be provided for the holding valves 61 that can realize the communication between the main flow passage 52 (upstream side) and the wheel cylinders 42 (downstream side) depending on the configuration of the brake device for a vehicle. In this case, when the antiskid control or the backup mode described above is carried out, there may be a case in which the holding valves 61 RR and 1 RL are maintained in the closed states by the antiskid control in addition to the closed states of the holding valves 61 FR and 61 FL in the backup mode so as to inhibit the communication between the main flow passage 52 and the wheel cylinders 42. Thus, it may be difficult to quickly decrease the wheel cylinder pressures Pwc even when the driver carries out the return operation on the brake pedal 10.

Therefore, when the driver carries out the return operation on the brake pedal 10 in a brake device for a vehicle in which check valves corresponding to the check valves CV1 and CV2 of this embodiment cannot be provided, the brake ECU 100 controls one of the holding valves 61 and the pressure reducing valves 62 into the open state in order to quickly decrease the wheel cylinder pressures Pwc in the wheel cylinders 42 in response to this return operation. A specific description is now given of this modified example.

In this modified example, under the state in which the holding valves 61 and the pressure reducing valves 62 are maintained in the closed states by following the antiskid control or the backup mode, when the driver carries out the return operation on the brake pedal 10, the brake ECU 100 permits the decrease in the wheel cylinder pressures Pwc in the wheel cylinders 42 for the respective wheels. Then, the brake ECU 100 estimates the wheel cylinder pressures Pwc in the respective wheel cylinders 42, thereby determining an estimated wheel cylinder pressures Pwc_s in order to decrease the wheel cylinder pressures Pwc in response to the return operation by the driver. It should be noted that, as a method of determining (calculating) the estimated wheel cylinder pressure Pwc_s, for example, there may be employed a method of detecting the estimated wheel cylinder pressure Pwc_s in a predetermined relationship with the pedal stroke Sm detected by the stroke sensor 105 immediately before the return operation by the driver.

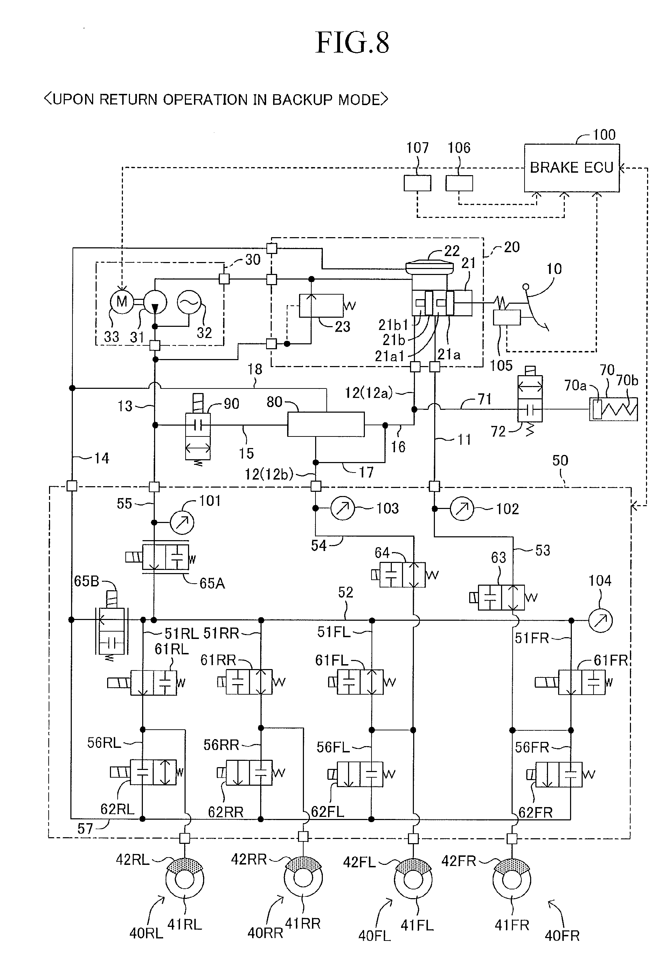

Then, the brake ECU 100 compares the detected control pressure Px in the main flow passage 52 (upstream side) detected by the control pressure sensor 104 connected to the main flow passage 52 and the determined estimated wheel cylinder pressure Pwc_s with each other. In this case, the driver has carried out the return operation on the brake pedal 10, and hence the detected control pressure Px in the main flow passage 52 (upstream side) is decreased, for example, as illustrated in FIG. 8, by the pressure reducing linear control valve 65B.

Then, the brake ECU 100 sets the detected control pressure Px reflecting the return operation by the driver as a target hydraulic pressure, and controls at least one of the holding valve 61 or the pressure reducing valve 62 into the open state so that the estimated wheel cylinder pressure Pwc_s matches the target hydraulic pressure (detected control pressure Px). First, a description is given below of a case of controlling the pressure reducing valves 62 into the open state.

The brake ECU 100 performs pressure reducing duty control to the pressure reducing valve 62 via the electromagnetic valve drive circuit by following a duty ratio set in advance for the opening and the closing of the pressure reducing valve 62. As a result, the working fluid can be communicated from the wheel cylinder 42 to the reservoir flow passage 57 via the pressure reducing valve 62, to thereby quickly decrease the estimated wheel cylinder pressure Pwc_s until the estimated wheel cylinder pressure Pwc_s matches the target hydraulic pressure (detected control pressure Px).

Alternatively, as illustrated in FIG. 8, the brake ECU 100 maintains the holding valve 61 in the open state via the electromagnetic valve drive circuit. As a result, the working fluid can be communicated from the wheel cylinder 42 to the main flow passage 52 decreased in the pressure via the holding valve 61, to thereby quickly decrease the estimated wheel cylinder pressure Pwc_s until the estimated wheel cylinder pressure Pwc_s matches the target hydraulic pressure (detected control pressure Px). Further, in this case, the estimated wheel cylinder pressure Pwc_s can be appropriately decreased until the estimated wheel cylinder pressure Pwc_s matches the target hydraulic pressure (detected control pressure Px) only by maintaining the holding valve 61 in the open state. As a result, generation of unnecessary vibration can be suppressed compared with the case in which the pressure reducing duty control is performed on the pressure reducing valve 62 to appropriately decrease the estimated wheel cylinder pressure Pwc_s.

As appreciated from the description given above, in this modified example, the holding valves 61 or the pressure reducing valves 62 can be controlled into the open state, to thereby quickly decrease the wheel cylinder pressures Pwc in the wheel cylinders 42 in response to the driver's operation of returning the brake pedal 10 during the antiskid control and in the backup mode. As a result, the intention of the driver can be appropriately reflected, and the driver can carry out the brake operation while sensing extremely excellent brake feeling as in the above-mentioned embodiment.

The modified example is carried out by making a determination to permit the decrease in the wheel cylinder pressure Pwc in each of the wheel cylinders 42 when the driver carries out the operation of returning the brake pedal 10. In this case, in addition to this determination, the present invention can be carried out by making a determination to permit the decrease in the wheel cylinder pressure Pwc in each of the wheel cylinders 42 also based on the magnitude of the estimated wheel cylinder pressures Pwc_s in each of the wheel cylinders 42. In this case, the decrease in the wheel cylinder pressure Pwc in each of the wheel cylinders 42 can be more securely permitted, and the same effects as of the above-mentioned modified example can thus be expected.

In carrying out the present invention, the present invention is not limited to the above-mentioned embodiment and the modified example, and different kinds of changes may be made thereto without departing from an object of the present invention.

For example, the above-mentioned embodiment and the modified example are carried out by directly transmitting the servo pressure output from the pressure increasing mechanism 80 to the wheel cylinder 42FL. In this case, the present invention can be carried out also by transmitting the servo pressure from the pressure increasing mechanism 80 to the master cylinder 21. In this case, specifically, a hydro booster is provided on the master cylinder 21, and the servo pressure is applied to the hydro booster from the pressure increasing mechanism 80. As a result, a hydraulic pressure as high as the servo pressure can be transmitted via the master cylinder 21 to the wheel cylinder 42FL, and the same effects as of the above-mentioned embodiment and the modified example can be expected.

Moreover, the above-mentioned embodiment and the modified example are carried out by employing the brake device for a vehicle including the pressure increasing mechanism 80 and the pressure increasing mechanism cut valve 90. In this case, the present invention can also be carried out by employing a brake device for a vehicle without the pressure increasing mechanism 80 and the pressure increasing mechanism cut valve 90. Also in this case, the same effects as of the above-mentioned embodiment and the modified example can be expected.

Further, when the initial check described above is carried out in the above-mentioned embodiment and modified example, operation sounds caused by the switching operations of the respective electromagnetic on-off valves may be generated. Therefore, for example, if the vehicle is an HV or a PHV, the initial check may be carried out when the rpm of an internal combustion engine is equal to or more than a predetermined rpm, or if the vehicle is an EV, the initial check may be carried out when a sound volume of an audio device is equal to or more than a predetermined sound volume. As a result, the operation sounds generated during the initial check can be mixed with a sound generated by the internal combustion engine or may be mixed with a sound generated from the audio device, and thus the operation sounds may be less sensed by the occupants.

## Claims

1. A brake device for a vehicle, comprising:
a master cylinder for generating a hydraulic pressure in response to an operation by a driver on a brake pedal;
a power hydraulic pressure source for generating a hydraulic pressure through drive of a pressure pump;
a valve mechanism comprising a plurality of electromagnetic valves to be controlled by electric signals, for carrying out transmission of the hydraulic pressure output from the master cylinder or the power hydraulic pressure source;
a wheel cylinder for applying a braking force to a wheel through the transmission of the hydraulic pressure output from the master cylinder or the power hydraulic pressure source via the valve mechanism; and
control means for controlling an operation of the valve mechanism,
the valve mechanism comprising:
holding valves, each of which comprises an electromagnetic on-off valve, provided for respective wheels so as to realize at least communication or shutoff between an upstream side to which the hydraulic pressure from the power hydraulic pressure source is transmitted and a downstream side to which the wheel cylinder is connected; and
a one-way valve for permitting only communication from the downstream side toward the upstream side so as to decrease the hydraulic pressure in the wheel cylinder, the one-way valve being arranged in parallel with a holding valve among the holding valves provided for the respective wheels, which is other than holding valves for permitting, in an open state, communication between the upstream side and the downstream side so as to transmit the hydraulic pressure from the power hydraulic pressure source to the wheel cylinder, and shutting off, in a closed state, the communication between the upstream side and the downstream side so as to transmit the hydraulic pressure from the master cylinder to the wheel cylinder.

2. A brake device for a vehicle according to claim 1, wherein the holding valve arranged in parallel with the one-way valve comprises a holding valve provided for, among brake systems for transmitting at least the hydraulic pressure from the power hydraulic pressure source to the wheel cylinders, a brake system configured so that a hydraulic pressure on the upstream side to which the hydraulic pressure from the power hydraulic pressure source is transmitted is always equal to or more than a hydraulic pressure on the downstream side connected to the wheel cylinder.

3. A brake device for a vehicle according to claim 2, wherein the brake system configured so that the hydraulic pressure on the upstream side to which the hydraulic pressure from the power hydraulic pressure source is transmitted is always equal to or more than the hydraulic pressure on the downstream side connected to the wheel cylinder comprises brake systems on rear right and left wheel sides for transmitting the hydraulic pressure from the power hydraulic pressure source to the wheel cylinders provided on a rear right wheel and a rear left wheel of the vehicle.

4. A brake device for a vehicle according to any one of claims 1 to 3, wherein, during an abnormal state in which there is a possibility of a leak of a working fluid in any of brake systems for transmitting the hydraulic pressure from the power hydraulic pressure source to the wheel cylinders provided on a front right wheel, a front left wheel, a rear right wheel, and a rear left wheel of the vehicle, the control means controls drive of the plurality of electromagnetic valves in the valve mechanism so as to maintain communication between the wheel cylinders provided on rear right and left wheel sides of the vehicle and the power hydraulic pressure source, to shut off communication between the wheel cylinders provided on front right and left wheel sides of the vehicle and the power hydraulic pressure source, and to transmit at least the hydraulic pressure from the master cylinder to the wheel cylinders provided on the front right and left wheel sides of the vehicle.

5. A brake device for a vehicle, comprising:
a master cylinder for generating a hydraulic pressure in response to an operation by a driver on a brake pedal;
a power hydraulic pressure source for generating a hydraulic pressure through drive of a pressure pump;
a valve mechanism comprising a plurality of electromagnetic valves to be controlled by electric signals, for carrying out transmission of the hydraulic pressure output from the master cylinder or the power hydraulic pressure source;
a wheel cylinder for applying a braking force to a wheel through the transmission of the hydraulic pressure output from the master cylinder or the power hydraulic pressure source via the valve mechanism; and
control means for controlling an operation of the valve mechanism,
the control means being configured to:
control, during an abnormal state in which there is a possibility of a leak of a working fluid in any of brake systems for transmitting the hydraulic pressure from the power hydraulic pressure source to the wheel cylinders provided on a front right wheel, a front left wheel, a rear right wheel, and a rear left wheel of the vehicle, drive of the plurality of electromagnetic valves in the valve mechanism so as to maintain communication between the wheel cylinders provided on rear right and left wheel sides of the vehicle and the power hydraulic pressure source, to shut off communication between the wheel cylinders provided on front right and left wheel sides of the vehicle and the power hydraulic pressure source, and to transmit at least the hydraulic pressure from the master cylinder to the wheel cylinders provided on the front right and left wheel sides of the vehicle; and
control, under the abnormal state, when an operation intending to decrease the hydraulic pressure in the wheel cylinder, which corresponds to an operation of returning the brake pedal on which a depressing operation has been carried out by the driver toward a return direction, is carried out, among the plurality of electromagnetic valves constructing the valve mechanism, one of a holding valve, which comprises an electromagnetic on-off valve for realizing at least communication or shutoff between an upstream side to which the hydraulic pressure from the power hydraulic pressure source is transmitted and a downstream side to which the wheel cylinder is connected, and a pressure reducing valve, which comprises an electromagnetic on-off valve for realizing at least communication or shutoff between the wheel cylinder and a reservoir, into an open state.

6. A brake device for a vehicle according to claim 5, wherein the control means estimates the hydraulic pressure in the wheel cylinder for each of the front right wheel, the front left wheel, the rear right wheel, and the rear left wheel of the vehicle, and, based on the estimated hydraulic pressures, controls one of the holding valve and the pressure reducing valve into the open state.

7. A brake device for a vehicle according to claim 6, wherein the control means compares a magnitude of an upstream side hydraulic pressure detected as a hydraulic pressure on the upstream side of the holding valve and a magnitude of the estimated hydraulic pressure in the wheel cylinder to each other, and, when the magnitude of the upstream side hydraulic pressure is less than the magnitude of the hydraulic pressure in the wheel cylinder, controls one of the holding valve and the pressure reducing valve into the open state.

8. A brake device for a vehicle according to claim 7, wherein the control means controls one of the holding valve and the pressure reducing valve into the open state so that the magnitude of the upstream side hydraulic pressure and the magnitude of the hydraulic pressure in the wheel cylinder match each other.

9. A brake device for a vehicle according to any one of claims 1 to 8, further comprising upstream side hydraulic pressure adjustment means for adjusting the magnitude of the hydraulic pressure on the upstream side to which the hydraulic pressure from the power hydraulic pressure source is transmitted,
wherein, at least when the control means controls the holding valve into the open state in response to an operation intending to decrease the hydraulic pressure in the wheel cylinder, which corresponds to an operation of returning the brake pedal on which a depressing operation has been carried out by the driver toward a return direction, the control means maintains the upstream side hydraulic pressure adjustment means in an operation preparation state so as to suppress a change in the hydraulic pressure on the upstream side in preparation for the change in the hydraulic pressure caused by shift of the holding valve to the open state.

10. A brake device for a vehicle according to claim 9, wherein, during antiskid control of suppressing an excessive slip in a fore-and-aft direction of the wheel to which the braking force is applied, when the control means controls the holding valve into the open state in response to the operation of returning the brake pedal on which the depressing operation has been carried out by the driver toward the return direction, the control means maintains the upstream side hydraulic pressure adjustment means in the operation preparation state so as to suppress the change in the hydraulic pressure on the upstream side in preparation for the change in the hydraulic pressure caused by the shift of the holding valve to the open state.

11. A brake device for a vehicle according to claim 9 or 10, wherein:
the upstream side hydraulic pressure adjustment means comprises an electromagnetic valve to be controlled by an electric signal for reducing the upstream side hydraulic pressure; and
when the control means controls the holding valve into the open state, the control means applies in advance, in order to suppress a change in the upstream side hydraulic pressure to a high pressure side caused by the shift of the holding valve to the open state, an opening current to the electromagnetic valve, the opening current being used for shift from the closed state to the open state in response to a hydraulic pressure higher than a predetermined target hydraulic pressure.

12. A brake device for a vehicle according to claim 11, wherein:
the electromagnetic valve comprises a linear control valve configured to shift from the closed state to the open state or from the open state to the closed state depending on a resultant force of a spring force of a spring, a differential pressure force caused by a differential pressure generated between the upstream side on which a working fluid relatively high in pressure communicates and the downstream side on which the working fluid relatively low in pressure communicates, and an electromagnetic attraction force generated through supply of a current; and
the control means is configured to:
use the predetermined target hydraulic pressure to set a target differential pressure for generating the differential pressure force in the linear control valve;
use the target differential pressure to determine the opening current for generating the electromagnetic attraction force for maintaining the linear control valve in the closed state at a differential pressure equal to or less than an arbitrary differential pressure and shifting the linear control valve to the open state at a differential pressure more than the arbitrary differential pressure, the arbitrary differential pressure having a predetermined relationship with a differential pressure for generating the differential pressure force; and
supply the opening current to the linear control valve.

13. A brake device for a vehicle according to claim 12, wherein:
the upstream side hydraulic pressure adjustment means comprises a motor for driving the pressure pump for the power hydraulic pressure source; and
when the control means controls the holding valve into the open state, the control means drives the motor to rotate in advance to increase the hydraulic pressure on the upstream side of the linear control valve so as to suppress the change in the hydraulic pressure on the upstream side to the high pressure side caused by the shift of the holding valve to the open state.

14. A brake device for a vehicle according to any one of claims 9 to 13, wherein the control means controls the holding valve to shift to the open state, and thereafter controls a supply current to be supplied to the holding valve so that the holding valve shifts from the open state to the closed state.

15. A brake device for a vehicle according to claim 14, wherein the control means is configured to:
control the supply current to be small when the holding valve comprises a normally-closed electromagnetic on-off valve; and
control the supply current to be large when the holding valve comprises a normally-open electromagnetic on-off valve.

16. A brake device for a vehicle according to claims 1 to 15, further comprising a pressure increasing mechanism connected to the master cylinder and the power hydraulic pressure source, for generating a hydraulic pressure having a predetermined ratio with respect to the hydraulic pressure from the master cylinder by using the hydraulic pressure from the power hydraulic pressure source.

17. A brake device for a vehicle according to claim 16, wherein the pressure increasing mechanism is mechanically operated by the hydraulic pressure output from the master cylinder in response to the operation by the driver on the brake pedal.
